(19) Europäisches Patentamt
European Patent Office
Office européen des brevets

(11) **EP 1 405 222 B1**

(12) **EUROPÄISCHE PATENTSCHRIFT**

(45) Veröffentlichungstag und Bekanntmachung des Hinweises auf die Patenterteilung:
**15.02.2012 Patentblatt 2012/07**

(51) Int Cl.:
**G10L 11/00** (2006.01)   **G06F 17/30** (2006.01)
**G11B 27/00** (2006.01)

(21) Anmeldenummer: **02747417.0**

(22) Anmeldetag: **20.06.2002**

(86) Internationale Anmeldenummer:
**PCT/EP2002/006849**

(87) Internationale Veröffentlichungsnummer:
**WO 2003/007185 (23.01.2003 Gazette 2003/04)**

(54) **VERFAHREN UND VORRICHTUNG ZUM ERZEUGEN EINES FINGERABDRUCKS UND VERFAHREN UND VORRICHTUNG ZUM IDENTIFIZIEREN EINES AUDIOSIGNALS**

METHOD AND DEVICE FOR PRODUCING A FINGERPRINT AND METHOD AND DEVICE FOR IDENTIFYING AN AUDIO SIGNAL

PROCEDE ET DISPOSITIF POUR PRODUIRE UNE EMPREINTE DIGITALE ET PROCEDE ET DISPOSITIF POUR IDENTIFIER UN SIGNAL AUDIO

(84) Benannte Vertragsstaaten:
**AT BE CH CY DE DK ES FI FR GB GR IE IT LI LU MC NL PT SE TR**

(30) Priorität: **10.07.2001 DE 10133333**

(43) Veröffentlichungstag der Anmeldung:
**07.04.2004 Patentblatt 2004/15**

(73) Patentinhaber: **m2any GmbH**
**85748 Garching (DE)**

(72) Erfinder:
 • **HERRE, Jürgen**
  **91054 Buckenhof (DE)**
 • **ALLAMANCHE, Eric**
  **90425 Nürnberg (DE)**
 • **HELLMUTH, Oliver**
  **91058 Erlangen (DE)**
 • **KASTNER, Thorsten**
  **96342 Stockheim/Reitsch (DE)**
 • **CREMER, Markus**
  **98693 Ilmenau (DE)**

(74) Vertreter: **Schoppe, Fritz**
**Schoppe, Zimmermann, Stöckeler & Zinkler**
**Patentanwälte**
**Postfach 246**
**82043 Pullach bei München (DE)**

(56) Entgegenhaltungen:
**US-A- 5 918 223**

 • **SRINIVASAMURTHY N ET AL: "Towards efficient and scalable speech compression schemes for robust speech recognition applications" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30. Juli 2000 (2000-07-30), Seiten 249-252, XP010511446 ISBN: 0-7803-6536-4**

**Beschreibung**

Die vorliegende Erfindung bezieht sich auf das Charakterisieren bzw. Identifizieren von Audiosignalen hinsichtlich ihres Inhalts, insbesondere auf das Erzeugen und Verwenden von verschiedenen Fingerabdrücken für ein Audiosignal

In den letzten Jahren ist die Verfügbarkeit multimedialen Datenmaterials, d. h. von Audiodaten, stark gestiegen. Diese Entwicklung wurde durch eine Reihe von technischen Faktoren bedingt. Diese technischen Faktoren umfassen beispielsweise die breite Verfügbarkeit des Internets, die breite Verfügbarkeit leistungsfähiger Rechner sowie die breite Verfügbarkeit leistungsfähiger Verfahren zur Datenkompression, d. h. Quellcodierung, von Audiodaten. Als Beispiel hierfür ist MPEG 1/2 Layer 3 genannt, das auch als MP3 bezeichnet wird.

Die riesigen Mengen audiovisueller Daten, die beispielsweise auf dem Internet weltweit verfügbar sind, verlangen nach Konzepten, die es ermöglichen, diese Daten nach inhaltlichen Kriterien zu beurteilen, zu katalogisieren oder zu verwalten. Es besteht der Bedarf, multimediale Daten gezielt durch Angabe sinnvoller Kriterien zu suchen und zu finden.

Dies erfordert den Einsatz sogenannter "inhaltsbasierter" Techniken, die aus den audiovisuellen Daten sogenannte Merkmale, die in der Technik auch als "Features" bezeichnet werden, extrahieren, die wichtige charakteristische Inhalts-Eigenschaften des interessierenden Signals darstellen. Basierend auf solchen Merkmalen bzw. Kombinationen solcher Merkmale können Ähnlichkeitsbeziehungen bzw. Gemeinsamkeiten zwischen den Audiosignalen hergeleitet werden. Dieser Vorgang erfolgt im allgemeinen durch Vergleich bzw. In-Beziehungsetzen der extrahierten Merkmalswerte aus verschiedenen Signalen, welche hier auch als "Stücke" bezeichnet werden sollen.

Das US-Patent Nr. 5,918,223 offenbart ein Verfahren für die Inhalts-basierte Analyse, Speicherung, Wiedergewinnung und Segmentierung von Audioinformationen. Eine Analyse von Audiodaten erzeugt einen Satz von numerischen Werten, der auch als Merkmalsvektor bezeichnet wird, und der dazu verwendet werden kann, um die Ähnlichkeit zwischen einzelnen Audiostücken, die typischerweise in einer Multimediadatenbank oder im World Wide Web gespeichert sind, zu klassifizieren und rangmäßig zu ordnen.

Die Analyse ermöglicht ferner die Beschreibung von benutzerdefinierten Klassen von Audiostücken basierend auf einer Analyse eines Satzes von Audiostücken, die alle Mitglieder einer benutzerdefinierten Klasse sind. Das System ist in der Lage, einzelne Tonabschnitte innerhalb eines längeren Tonstücks zu finden, was es ermöglicht, daß die Audioaufzeichnung automatisch in eine Serie von kürzeren Audiosegmenten segmentiert wird.

Als Merkmale zur Charakterisierung bzw. Klassifizierung von Audiostücken hinsichtlich ihres Inhalts wird die Lautheit eines Stückes, die Tonhöhe, die Tonhelligkeit ("Brightness"), die Bandbreite und die sogenannten Mel-Frequenz-Cepstral-Koeffizienten (MFCCs) bei periodischen Intervallen in dem Audiostück verwendet. Die Werte pro Block oder Frame werden gespeichert und einer ersten Ableitung unterzogen. Hierauf werden spezifische statistische Größen berechnet, wie z.B. der Mittelwert oder die Standardabweichung, und zwar von jedem dieser Merkmale einschließlich der ersten Ableitungen derselben, um eine Variation über der Zeit zu beschreiben. Dieser Satz von statistischen Größen bildet den Merkmalsvektor. Der Merkmalsvektor des Audiostücks wird in einer Datenbank in Zuordnung zu der Ursprungsdatei gespeichert, wobei ein Benutzer auf die Datenbank zugreifen kann, um entsprechende Audiostücke abzurufen.

Das Datenbanksystem ist in der Lage, den Abstand in einem n-dimensionalen Raum zwischen zwei n-dimensionalen Vektoren zu quantifizieren. Es ist ferner möglich, Klassen von Audiostücken zu erzeugen, indem ein Satz von Audiostücken spezifiziert wird, der in eine Klasse gehört. Beispielsklassen sind Vogelgezwitscher, Rockmusik usw. Der Benutzer wird in die Lage versetzt, die Audiostück-Datenbank unter Verwendung spezifischer Verfahren zu durchsuchen. Das Ergebnis einer Suche ist eine Liste von Tondateien, die geordnet nach ihrem Abstand von dem spezifizierten n-dimensionalen Vektor aufgelistet sind. Der Benutzer kann die Datenbank hinsichtlich Ännlichkeits-Merkmalen, hinsichtlich akustischer bzw. psychoakustischer Merkmale, hinsichtlich subjektiver Merkmale oder hinsichtlich spezieller Geräusche, wie z.B. Bienensummen, durchsuchen.

Die Fachveröffentlichung "Multimedia Content Analysis", Yao Wang u.a., IEEE Signal Processing Magazine, November 2000, Seiten 12 bis 36, offenbart ein ähnliches Konzept, um Multimediastücke zu charakterisieren. Als Merkmale zum Klassifizieren des Inhalts eines Multimediastückes werden Zeitbereichsmerkmale oder Frequenzbereichsmerkmale vorgeschlagen. Diese umfassen die Lautstärke, die Tonhöhe als Grundfrequenz einer Audiosignalform, spektrale Merkmale, wie z. B. der Energieinhalt eines Bandes bezogen auf den Gesamtenergiegehalt, Grenzfrequenzen im Spektralverlauf etc. Neben Kurzzeitmerkmalen, die die genannten Größen pro Block von Abtastwerten des Audiosignals betreffen, werden auch Langzeitgrößen vorgeschlagen, die sich auf einen längeren Zeitraum des Audiostücks beziehen.

Zur Charakterisierung von Audiostücken werden verschiedene Kategorien vorgeschlagen, wie z.B. Tiergeräusche, Glockengeräusche, Geräusche einer Menschenmenge, Gelächter, Maschinengeräusche, Musikinstrumente, männliche Sprache, weibliche Sprache, Telefongeräusche oder Wassergeräusche.

Problematisch bei der Auswahl der verwendeten Merkmale ist, daß der Rechenaufwand zum Extrahieren eines Merkmals moderat sein soll, um eine zügige Charakterisierung zu erreichen, daß jedoch gleichzeitig das Merkmal für das Audiostück charakteristisch sein soll, derart, daß zwei unterschiedliche Stücke auch voneinander unterscheidbare Merkmale aufweisen.

Zur Kennzeichnung eines Audiosignals wird, wie es ausgeführt worden ist, eine Kennzeichnung des Audiosignals bzw. ein sogenanntes Feature, das auch als Fingerabdruck bezeichnet wird, extrahiert. An die Art und Weise des Features werden zwei unterschiedliche Anforderungen gestellt. Die eine Anforderung an den Fingerabdruck besteht darin, daß der Fingerabdruck das Audiosignal möglichst eindeutig signalisieren soll. Die andere Anforderung an den Fingerabdruck besteht darin, daß der Fingerabdruck möglichst wenig Informationen enthalten soll, d.h. daß der Fingerabdruck möglichst wenig Speicherplatz verwenden soll. Diese beiden Anforderungen sind konträr. Am einfachsten ist dies daran zu erkennen, daß der beste "Fingerabdruck" für ein Audiosignal das Audiosignal selbst, d.h. die Folge von Abtastwerten, die das Audiosignal darstellt, ist. Ein solcher Fingerabdruck würde jedoch die zweite Anforderung stark verletzen, da der Fingerabdruck des Audiosignals viel zu viel Speicher in Anspruch nehmen würde, was zum einen das Speichern von sehr vielen Fingerabdrücken für sehr viele Audiosignale in einer Musikerkennungsdatenbank unmöglich machen würde. Ein weiterer Nachteil ist auch, daß Matching-Algorithmen, die einen Such-Fingerabdruck mit einer Vielzahl gespeicherter Datenbank-Fingerabdrücken vergleichen sollen, um so mehr Rechenzeit benötigen, je größer der Suchfingerabdruck bzw. der Datenbank-Fingerabdruck ist.

Das andere Extrem würde darin bestehen, z.B. nur einen Mittelwert über alle Abtastwerte eines Stücks zu nehmen. Dieser Mittelwert beansprucht nur sehr wenig Speicherplatz und ist daher bestens sowohl für eine große Musikdatenbank als auch für Matching-Algorithmen geeignet. Die Kennzeichnungskraft eines solchen Fingerabdrucks würde jedoch gegenüber einer für einen Menschen irrelevanten Änderung wenig robust sein.

Ein optimaler Kompromiß zwischen Kennzeichnungskraft einerseits und Datenumfang des Fingerabdrucks andererseits existiert nicht generell, sondern wird üblicherweise empirisch herausgefunden bzw. hängt von den Gegebenheiten der jeweiligen Anwendung hinsichtlich verfügbarem Speicherplatz und verfügbarer Übertragungskapazität ab. Diese Vorgehensweise hat den Nachteil, daß die verschiedenen Typen von Fingerabdrücken immer nur für eine spezielle Anwendung optimal geeignet sind, für andere Anwendungen jedoch mehr oder weniger ungeeignet sind. In diesem Zusammenhang sei darauf hingewiesen, daß eine Audiosignalidentifikation bzw. Charakterisierung nur dann von besonderem Interesse ist, wenn sehr große Merkmals-Datenbanken existieren, deren Fingerabdrücke mit einem Such-Fingerabdruck verglichen werden könnten, um entweder ein Audiosignal direkt zu identifizieren, oder das Audiosignal dahingehend zu charakterisieren, daß ein Ähnlichkeitsmaß des Audiosignals zu einem oder mehreren der Audiosignale in der Datenbank ausgegeben wird. Wenn festgestellt wird, daß ein bestimmter Typ von Fingerabdruck für die eine Anwendung zwar günstig war, jedoch für die andere Anwendung nicht mehr günstig war, muß daher, um einen optimalen Kompromiß zwischen Kennzeichnungskraft einerseits und Speicherplatz andererseits zu erreichen, für die große Menge von Audiosignalen, deren Fingerabdrücke in der Datenbank gespeichert sind, eine erneute Merkmalsextraktion-Verarbeitung durchgeführt werden, um eine neue Merkmals-Datenbank zu schaffen, die für aktuelle Anwendungen ein optimaler Kompromiß ist. Einerseits sind die Originalstücke für eine neue Merkmalsextraktion gar nicht verfügbar (für eine Audiodatenbank werden z. B. 500.000 Audiostücke verwendet). Andererseits resultiert dies - falls überhaupt möglich - in einem großen Aufwand für die Merkmalsextraktionsverarbeitung, um die "neue" Datenbank zu füllen bzw. zu "trainieren".

Dieses Problem verschärft sich insbesondere dadurch, daß über das Internet zwar ein weltweites Netz zur Verfügung steht, das im Prinzip eine nahezu unendliche Speicherkapazität hat, daß es jedoch unmöglich ist, vielen verschiedenen "Fingerabdruck-Produzenten" immer mitzuteilen, welcher Fingerabdruck für welche Anwendung am günstigsten ist, derart, daß immer ausreichend Fingerabdruck-Datenbankmaterial zur Verfügung steht, um eine sinnvolle Audiosignalidentifikation bzw. Charakterisierung durchführen zu können.

Eine weitere Problematik besteht darin, daß Fingerabdrücke auch über die unterschiedlichsten Übertragungskanäle übertragen werden sollten. Ein Übertragungskanal mit sehr geringer Übertragungskapazität ist beispielsweise ein Freiluft-Übertragungskanal eines Handy-Telephons. Hier spielt neben der Kennzeichnungskraft und der Speicherkapazität für die Datenbank auch die Bandbreite des Übertragungskanals eine entscheidende Rolle. Es würde keinen Sinn machen, einen sehr kennzeichnungskräftigen Fingerabdruck zu erzeugen, der dann kaum oder nicht über den schmalbandigen Übertragungskanal zu übertragen ist. Der optimale Fingerabdruck für eine solche Anwendung wird daher zusätzlich durch den Übertragungskanal diktiert, über den der Fingerabdruck z.B. einer Suchdatenbank übertragen werden soll.

Die Aufgabe der vorliegenden Erfindung besteht darin, ein flexibles und an unterschiedliche Anforderungen anpaßbares Fingerabdruckkonzept zu schaffen.

Diese Aufgabe wird durch ein Verfahren zum Erzeugen eines Fingerabdrucks nach Patentanspruch 1, ein Verfahren zum Charakterisieren eines Audiosignals nach Patentanspruch 11, eine Fingerabdruckdarstellung nach Patentanspruch 15, eine Vorrichtung zum Erzeugen eines Fingerabdrucks nach Patentanspruch 16 oder eine Vorrichtung zum Charakterisieren eines Audiosignals nach Patentanspruch 17 gelöst.

Der vorliegenden Erfindung liegt die Erkenntnis zugrunde, daß ein möglichst universelles Fingerabdruckkonzept dadurch erhalten werden kann, daß der Fingerabdruck gemäß einem Modus einer Mehrzahl von vorbestimmten Fingerabdruckmodi erzeugt worden ist, wobei sich die Fingerabdruckmodi alle auf dieselbe Art des Fingerabdrucks beziehen, wobei die Fingerabdruckmodi jedoch verschiedene Fingerabdrücke liefern, die sich in ihrer Datenmenge einerseits und ihrer Kennzeichnungsstärke zum Charakterisieren eines Audiosignals andererseits unterscheiden. Die Fingerabdruckmodi sind erfindungsgemäß so vorbestimmt, daß ein Fingerabdruck gemäß einem Fingerabdruckmodus, der eine erste Kennzeichnungskraft hat, in einen Fingerabdruck gemäß einem Fingerabdruckmodus, der eine zweite Kennzeichnungskraft, ohne Verwendung des Audiosignals selbst konvertierbar ist. Dieser "skalierbare" Fingerabdruck ermöglicht es, daß beispielsweise eine Datenbank mit sehr kennzeichnungskräftigen, datenaufwendigen Fingerabdrücken bereitgestellt wird. Der aufwendige Datenbank-Fingerabdruck, der gemäß einem der vorbestimmten Fingerabdruckmodi erzeugt worden ist, ist ohne weiteres in einen "niedereren" Fingerabdruck konvertierbar, welcher eine geringere Kennzeichnungskraft hat, ohne das Audiosignal selbst einer Merkmalsextraktion zu unterziehen.

Vorzugsweise wird immer der Fingerabdruck mit höherer Kennzeichnungskraft des Such-Fingerabdrucks und des Datenbank-Fingerabdrucks konvertiert, derart, daß zwei Fingerabdrücke miteinander verglichen werden, die auch miteinander vergleichbar sind. Wird eine Skalierung mit vielen verschiedenen Fingerabdruckmodi erfindungsgemäß bereitgestellt, so ist die Datenbank dazu geeignet, so viele verschiedene Fingerabdrücke, d.h. gemäß unterschiedlichen Fingerabdruckmodi erzeugte Fingerabdrücke, zu verarbeiten, wie Fingerabdruckmodi insgesamt vorhanden sind.

Dies hat den Vorteil, daß unter Verwendung derselben Fingerabdruck-Datenbank sehr kennzeichnungsschwache Fingerabdrücke, aber auch sehr kennzeichnungsstarke Fingerabdrücke verarbeitet werden können, so daß, abhängig von den zugelassenen vorbestimmten Fingerabdruckmodi für jede Anwendung ein geeigneter Fingerabdruckmodus gefunden werden kann, während dennoch immer ein und dieselbe Fingerabdruck-Datenbank verwendet werden kann.

Dieses Konzept hat weiterhin den Vorteil, daß Produzenten von Fingerabdrücken für Audiodatenbanken die Aufgabe genommen wird, ständig andere Fingerabdrücke für sich verändernde Anwendungen zu erzeugen, sondern daß einmal ein skalierbarer Fingerabdruck erzeugt wird, der dann aufgrund seines Skalierbarkeitsmerkmals für eine Vielzahl von Anwendungen verwendet werden kann. Andererseits wird den Benutzern solcher Suchdatenbanken genügend Flexibilität dahingehend eingeräumt, daß sie, wenn es die Umstände erfordern, entweder einen sehr kennzeichnungsschwachen aber sehr schnell zu übertragenden Fingerabdruck erzeugen können, während derselbe Anwender bei einer anderen Anwendung, bei der es mehr auf die Kennzeichnungskraft und weniger auf die Datenmenge des Fingerabdrucks ankommt, einen sehr kennzeichnungskräftigen Fingerabdruck erzeugen kann. Der Benutzer kann für beide Anwendungsfälle auf ein und dieselbe Datenbank zugreifen, was das ganze Konzept der Kontext-basierten Audiosignalbeschreibung wesentlich vereinfacht und damit benutzerfreundlicher macht. Insbesondere die Benutzerfreundlichkeit und Einfachheit der Bedienung ist für eine breite kommerzielle Durchsetzung am Markt entscheidend.

Vorzugsweise wird eine Skalierbarkeit hinsichtlich der Frequenz und/oder eine Skalierbarkeit hinsichtlich der Zeit eingesetzt. Die Skalierbarkeit hinsichtlich der Frequenz wird gemäß einem bevorzugten Ausführungsbeispiel der vorliegenden Erfindung dadurch erreicht, daß die Fingerabdruckmodi jeweils separate Fingerabdruckinformationen für separate Teilbänder des Audiosignals enthalten, und daß sich die Fingerabdruckmodi untereinander dadurch unterscheiden, daß sie separate Fingerabdruckinformationen für eine unterschiedliche Anzahl von Teilbändern umfassen. Diese Festlegung der Teilbänder ist für alle Fingerabdruckmodi die gleiche. Wird eine Datenbank mit sehr kennzeichnungskräftigen Fingerabdrücken erzeugt, d.h. enthält der Fingerabdruckmodus, in dem die Fingerabdrücke für die Datenbank erzeugt worden sind, separate Fingerabdruckinformationen für z.B. 20 Teilbänder des Audiosignals, so würden andere, weniger kennzeichnungskräftige Fingerabdruckmodi zu Fingerabdrücken führen, die z.B. separate Fingerabdruckinformationen für nur 15, 10, 5 oder nur ein einziges Teilband enthalten. Sämtliche Fingerabdrücke, die gemäß den unterschiedlichen Fingerabdruckmodi erzeugt worden sind, sind ohne weiteres abwärts kompatibel, da bei einer Matching-Operation mit der Datenbank von dem Datenbank-Fingerabdruck lediglich die Fingerabdruckinformationen für die Teilbänder genommen werden, die auch in dem Such-Fingerabdruck enthalten sind. Im Extremfall würde dann für eine Matching-Operation von 20 separaten Fingerabdruckinformationen eines Fingerabdrucks lediglich die Fingerabdruckinformationen eines einzigen Teilbands verwendet werden, wenn der Such-Fingerabdruck ebenfalls nur Fingerabdruckinformationen für ein einziges Teilband umfaßt.

Eine weitere bevorzugte Alternative ist die Skalierbarkeit über der Zeit. Ein relativ kennzeichnungsschwacher Fingerabdruck enthält beispielsweise Fingerabdruckinformationen von 10 Blöcken von Abtastwerten des Audiosignals, während ein kennzeichnungsstarker Fingerabdruck Fingerabdruckinformationen pro jedem Block von Abtastwerten des Audiosignals umfaßt. Bei gleich großer Blocklänge für beide Fingerabdrücke werden zur Abwärtskonvertierung entsprechend viele zeitlich aufeinander folgende Fingerabdruckinformationen mit hoher Kennzeichnungskraft kombiniert, um aus diesen einen konvertierten Fingerabdruck zu erzeugen, der dieselbe Anzahl von Abtastwerten kennzeichnet wie der kennzeichnungsschwache Fingerabdruck. Die Fingerabdruckmodi unterscheiden sich hierbei dahingehend, daß ein sehr kennzeichnungsschwacher Fingerabdruckmodus viele Blöcke von Abtastwerten in einen einzigen Fingerabdruck verarbeitet, während ein sehr kennzeichnungskräftiger Fingerabdruckmodus z. B. pro Block einen eigenen Fingerabdruck erzeugt. Bei festgelegter Blockgröße kann, ohne daß das Audiosignal selbst erneut einer Merkmalsextraktion unterzogen werden muß, aus der entsprechenden Anzahl von kennzeichnungskräftigen Fingerabdruckmodi ein kennzeichnungsschwacher Fingerabdruck erzeugt werden, um beispielsweise einen Datenbankvergleich durchführen zu können.

Bevorzugte Ausführungsbeispiele der vorliegenden Erfindung werden nachfolgend bezugnehmend auf die beiliegenden Zeichnungen detailliert erläutert. Es zeigen:

Fig. 1 ein Blockschaltbild zum Erzeugen eines Fingerabdrucks;

Fig. 2 ein Blockschaltbild einer erfindungsgemäßen Vorrichtung zum Charakterisieren eines Audiosignals;

Fig. 3a eine Darstellung der Einteilung eines Audiosignals in verschiedene Teilbänder;

Fig. 3b eine schematische Darstellung von verschiedenen Fingerabdruckdarstellungen, die durch verschiedene Fingerabdruckmodi aus der entweder 3a gezeigten Teilbandaufteilung erzeugt werden können;

Fig. 4a eine Darstellung einer Blockaufteilung eines Audiosignals über der Zeit;

Fig. 4b eine schematische Übersicht über diverse Fingerabdruckdarstellungen, die gemäß verschiedener Fingerabdruckmodi aus der in Fig. 4a gezeigten Blockeinteilung erzeugt werden können; und

Fig. 5 ein Prinzipblockschaltbild eines Mustererkennungssystems.

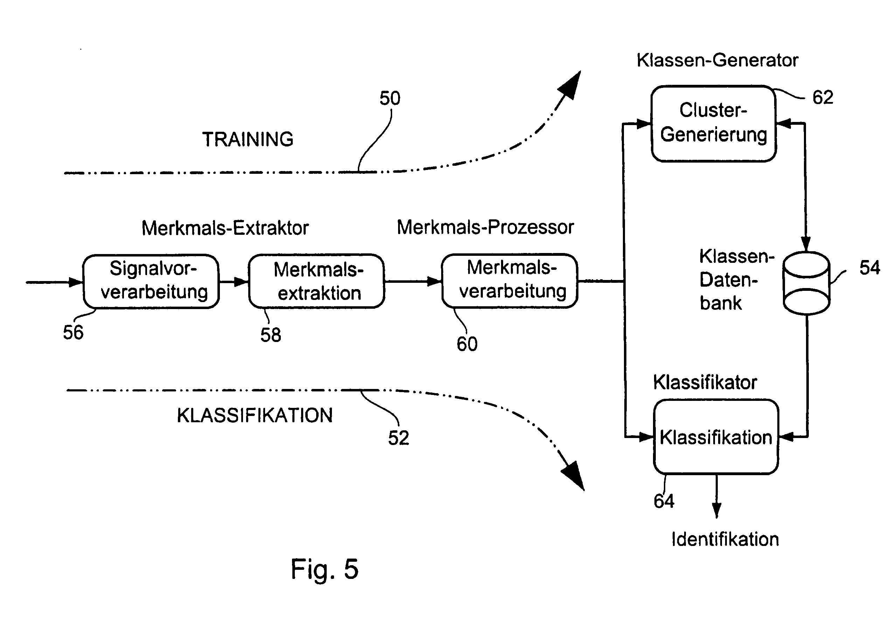

Im nachfolgenden wird auf Fig. 5 eingegangen, die eine schematische Übersicht über ein Mustererkennungssystem zeigt, bei dem die vorliegende Erfindung vorteilhaft eingesetzt werden kann. Prinzipiell unterscheidet man bei einem in Fig. 5 gezeigten Mustererkennungssystem zwischen zwei Betriebsmodi, nämlich dem Trainingsmodus 50 und dem Klassifikationsmodus 52.

In dem Trainings-Modus werden Daten "eintrainiert", d. h. dem System zugefügt und anschließend in einer Datenbank 54 aufgenommen.

Im Klassifikations-Modus wird versucht, ein zu charakterisierendes Signal mit den in der Datenbank 54 vorhandenen Einträgen zu vergleichen und zu ordnen.

Das Mustererkennungssystem umfaßt eine Einrichtung 56 zur Signalvorverarbeitung, eine nachgeschaltete Einrichtung 58 zur Merkmalsextraktion, eine Einrichtung 60 zur Merkmalsverarbeitung, eine Einrichtung 62 für eine Cluster-Generierung, und eine Einrichtung 64 zum Durchführen einer Klassifikation, um beispielsweise als Ergebnis des Klassifikations-Modus 52 eine solche Aussage über den Inhalt des zu charakterisierenden Signals zu treffen, daß das Signal mit dem Signal xy, das in einem früheren Trainings-Modus eintrainiert worden ist, identisch ist.

Im nachfolgenden wird auf die Funktionalität der einzelnen Blöcke von Fig. 5 eingegangen.

Der Block 56 bildet zusammen mit dem Block 58 einen Merkmals-Extraktor, während der Block 60 einen Merkmalsprozessor darstellt. Der Block 56 setzt ein Eingangssignal auf ein einheitliches Zielformat um, wie z. B. die Anzahl der Kanäle, die Abtastrate, die Auflösung (in Bits pro Abtastwert) usw. Dies ist insofern sinnvoll und notwendig, da keine Voraussetzungen über die Quelle, aus der das Eingangssignal stammt, gemacht werden sollte.

Die Einrichtung 58 zur Merkmalsextraktion dient dazu, die üblicherweise große Informationsmenge am Ausgang der Einrichtung 56 auf eine kleine Informationsmenge einzuschränken. Die zu untersuchenden Signale haben meist eine hohe Datenrate, also eine hohe Anzahl von Abtastwerten pro Zeitabschnitt. Die Einschränkung auf eine kleine Informationsmenge muß so stattfinden, daß die Essenz des ursprünglichen Signals, also die Eigenheit desselben, nicht verloren geht. In der Einrichtung 58 werden vorgegebene charakteristische Eigenschaften, wie allgemein beispielsweise Lautheit, Grundfrequenz, usw. und/oder, gemäß der vorliegenden Erfindung, Tonalitätsmerkmale bzw. das SFM, aus dem Signal extrahiert. Die so gewonnenen Tonalitätsmerkmale sollen sozusagen die Essenz des untersuchten Signals beinhalten.

In dem Block 60 können die zuvor errechneten Merkmalsvektoren verarbeitet werden. Eine einfache Verarbeitung besteht in der Normierung der Vektoren. Mögliche Merkmalsverarbeitungen sind lineare Transformationen, wie beispielsweise die Karhunen-Loeve-Transformation (KLT) oder die lineare Diskriminanz-Analyse (LDA), die in der Technik bekannt sind. Weitere insbesondere auch nichtlineare Transformationen sind ebenfalls zur Merkmalsverarbeitung anwendbar.

Der Klassengenerator dient dazu, die verarbeiteten Merkmalsvektoren zu Klassen zusammenzufassen. Diese Klassen entsprechen einer kompakten Darstellung des zugehörigen Signals. Der Klassifikator 64 dient schließlich dazu, einen erzeugten Merkmalsvektor einer vordefinierten Klasse bzw. einem vordefinierten Signal zuzuordnen.

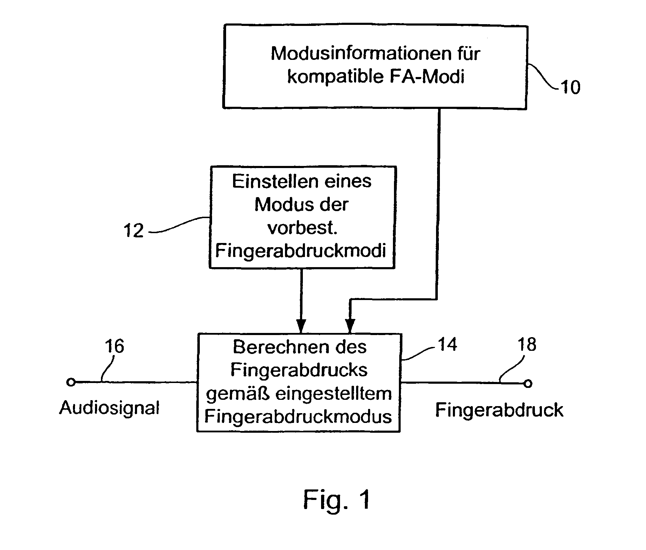

Fig. 1 zeigt schematisch eine Vorrichtung zum Erzeugen eines Fingerabdrucks eines Audiosignals, wie sie beispielsweise im Block 58 von Fig. 5 vorhanden sein kann. Zur Erzeugung eines Fingerabdrucks eines Audiosignals werden Informationen verwendet, die eine Mehrzahl von vorbestimmten Fingerabdruckmodi definieren, wobei diese Modusinformationen für untereinander kompatible Fingerabdruckmodi mittels einer Einrichtung 10 gespeichert sind. Die durch die in der Einrichtung 10 gespeicherten Modusinformationen definierten Fingerabdruckmodi beziehen sich alle auf dieselbe Art des Fingerabdrucks, wobei die Fingerabdruckmodi jedoch verschiedene Fingerabdrücke liefern, die sich in ihrer Datenmenge einerseits und ihrer Kennzeichnungsstärke zum Identifizieren des Audiosignals andererseits unterscheiden. Die Fingerabdruckmodi sind erfindungsgemäß so vorbestimmt, daß ein Fingerabdruck gemäß einem Fingerabdruckmodus, der eine erste Kennzeichnungskraft hat, in einen Fingerabdruck gemäß einem Fingerabdruckmodus, der eine zweite Kennzeichnungskraft hat, ohne Verwendung des Audiosignals selbst konvertierbar ist. Vorzugsweise wird eine Konvertierbarkeit von dem Fingerabdruck mit höherer Kennzeichnungskraft zu dem Fingerabdruck mit niedriger Kennzeichnungskraft bevorzugt. Je nach Anwendungsfall ist es jedoch auch möglich, eine Aufwärtskompatibilität beispielsweise durch Interpolation etc. sicherzustellen.

Die erfindungsgemäße Vorrichtung umfaßt ferner eine Einrichtung 12 zum Einstellen eines Fingerabdruckmodus aus der Mehrzahl von vorbestimmten Fingerabdruckmodi. In einer Einrichtung 14 zum Berechnen des Fingerabdrucks gemäß dem durch die Einrichtung 12 eingestellten Fingerabdruckmodus wird schließlich ein Fingerabdruck eines über einen Eingang 16 zugeführten Audiosignals berechnet und an einem Ausgang 18 ausgegeben. Die Einrichtung 14 zum Berechnen des Fingerabdrucks gemäß dem durch die Einrichtung 12 eingestellten Fingerabdruckmodus steht mit der Speichereinrichtung 10 in Verbindung, um je nach Fingerabdruckmodus die entsprechenden Berechnungsvorschriften anzuwenden.

Im nachfolgenden wird näher auf die Einrichtung 14 zum Berechnen des Fingerabdrucks gemäß einem eingestellten Fingerabdruckmodus eingegangen. Es hat sich herausgestellt, daß sich als Merkmal, das einerseits robust ist und andererseits günstig skalierbar ist, die Tonalität eines Audiosignals gut eignet.

Zur Berechnung des Tonalitätsmaßes eines Stückes können verschiedene Verfahren angewendet werden. Ein zu charakterisierendes Zeitsignal kann mittels einer Einrichtung in den Spektralbereich umgesetzt werden, um aus einem Block von zeitlichen Abtastwerten einen Block von Spektralkoeffizienten zu erzeugen. Wie später ausgeführt wird, kann für jeden Spektralkoeffizienten bzw. für jede Spektralkomponente ein eigener Tonalitätswert bestimmt werden, um beispielsweise mittels einer Ja/Nein-Bestimmung zu klassifizieren, ob eine Spektralkomponente tonal ist oder nicht. Unter Verwendung der Tonalitätswerte für die Spektralkomponenten und der Energie bzw. Leistung der Spektralkomponenten, kann dann das Tonalitätsmaß für das Signal auf eine Vielzahl von verschiedenen Arten berechnet werden.

Aufgrund der Tatsache, daß ein quantitatives Tonalitätsmaß erhalten wird, ist es auch möglich, Abstände bzw. Ähnlichkeiten zwischen zwei Tonalitäts-indexierten Stücken anzugeben, wobei Stücke als ähnlich klassifiziert werden können, wenn ihre Tonalitätsmaße sich nur über eine Differenz kleiner als eine vorbestimmte Schwelle unterscheiden, während andere Stücke als unähnlich klassifiziert werden können, wenn sich ihre Tonalitätsindizes durch eine Differenz unterscheiden, die größer als eine Unähnlichkeitsschwelle ist. Neben der Differenz zwischen zwei Tonalitätsmaßen können zur Bestimmung des Tonalitätsabstandes zwischen zwei Stücken weitere Größen verwendet werden, wie z. B. der Betrag der Differenz zwischen zwei Werten, das Quadrat einer Differenz, der Quotient zwischen zwei Tonalitätsmaßen weniger Eins, die Korrelation zwischen zwei Tonalitätsmaßen, die Distanzmetrik zwischen zwei Tonalitätsmaßen, die n-dimensionale Vektoren sind, etc.

Es sei darauf hingewiesen, daß das zu charakterisierende Signal nicht unbedingt ein Zeitsignal sein muß, sondern daß dasselbe auch ein beispielsweise MP3-codiertes Signal sein kann, das aus einer Folge von Huffman-Codewörtern besteht, die aus quantisierten Spektralwerten erzeugt worden sind.

Die quantisierten Spektralwerte wurden aus den ursprünglichen Spektralwerten durch Quantisierung erzeugt, wobei die Quantisierung derart gewählt wurde, daß das durch die Quantisierung eingeführte Quantisierungsrauschen unterhalb der psychoakustischen Maskierungsschwelle liegt. In einem solchen Fall kann direkt der codierte MP3-Datenstrom verwendet werden, um beispielsweise mittels einer MP3-Decodierers die Spektralwerte zu berechnen. Es ist nicht nötig, vor der Bestimmung der Tonalität eine Umsetzung in den Zeitbereich und dann wieder eine Umsetzung in den Spektralbereich vorzunehmen, sondern es können die innerhalb des MP3-Decodierers berechneten Spektralwerte unmittelbar genommen werden, um die Tonalität pro Spektralkomponente oder das SFM (SFM = Spectral Flatness Measure = Maß für die spektrale Flachheit) zu berechnen. Wenn zur Bestimmung der Tonalität daher Spektralkomponenten verwendet werden, und wenn das zu charakterisierende Signal ein MP3-Datenstrom ist, so ist die Einrichtung 40 wie ein Decodierer aufgebaut, jedoch ohne die inverse Filterbank.

Das Maß für die spektrale Flachheit (SFM) wird durch folgende Gleichung berechnet.

$$SFM = \frac{\left[\prod_{n=0}^{N-1} X(n)\right]^{\frac{1}{N}}}{\frac{1}{N}\sum_{n=0}^{N-1} X(n)}$$

In dieser Gleichung steht X(n) für das Betragsquadrat einer Spektralkomponente mit dem Index n, während N für die Gesamtanzahl der Spektralkoeffizienten eines Spektrums steht. Aus der Gleichung ist zu sehen, daß das SFM gleich dem Quotienten aus dem geometrischen Mittel der Spektralkomponenten zum arithmetischen Mittel der Spektralkomponenten ist. Wie bekannt ist, ist das geometrische Mittel immer kleiner oder höchstens gleich dem arithmetischen Mittel, so daß das SFM einen Wertebereich hat, der zwischen 0 und 1 liegt. Dabei deutet ein Wert nahe 0 auf ein tonales Signal und ein Wert nahe 1 auf ein eher rauschartiges Signal mit einem flachen Spektralverlauf hin. Es sei darauf hingewiesen, daß das arithmetische Mittel und das geometrische Mittel nur gleich sind, wenn alle X(n) identisch sind, was einem völlig atonalen, d. h. rauschartigen oder impulsartigen Signal entspricht. Ist dagegen im Extremfall lediglich eine Spektralkomponente betragsmäßig sehr groß, während andere Spektralkomponenten X(n) betragsmäßig sehr klein sind, so wird das SFM einen Wert nahe 0 haben, was auf ein sehr tonales Signal hinweist.

Das SFM ist in "Digital Coding of Waveforms", Englewood Cliffs, NJ, Prentice-Hall, N. Jayant, P. Noll, 1984, beschrieben und wurde ursprünglich als Maß für den maximal zu erreichenden Codiergewinn aus einer Redundanzreduktion definiert. Aus dem SFM kann dann das Tonalitätsmaß ermittelt werden.

Eine weitere Möglichkeit zum Bestimmen der Tonalität der Spektralwerte besteht in der Bestimmung von Spitzen im Leistungsdichtespektrum des Audiosignals, wie es in MPEG-1 Audio ISO/IEC 11172-3, Annex D1 "Psychoacoustic Model 1", beschrieben ist. Hierbei wird der Pegel einer Spektralkomponente ermittelt. Daraufhin werden die Pegel von zwei die eine Spektralkomponente umgebenden Spektralkomponenten bestimmt. Eine Klassifizierung der Spektralkomponente als tonal findet dann statt, wenn der Pegel der Spektralkomponente um einen vorbestimmten Faktor größer ist als ein Pegel einer umgebenden Spektralkomponente. Die vorbestimmte Schwelle wird im Stand der Technik als 7dB angenommen, wobei für die vorliegende Erfindung jedoch beliebige andere vorbestimmte Schwellen verwendet werden können. Dadurch kann für jede Spektralkomponente angegeben werden, ob diese tonal ist oder nicht.

Eine weitere Möglichkeit zur Bestimmung der Tonalität einer Spektralkomponente besteht in der Auswertung der zeitlichen Prädizierbarkeit, d. h. Vorhersagbarkeit, der Spektralkomponente. Hierbei wird wieder auf MPEG-1 Audio ISO/IEC 11172-3, Annex D2 "Psychoacoustic Model 2", verwiesen. Allgemein wird ein aktueller Block von Abtastwerten des zu charakterisierenden Signals in eine spektrale Darstellung umgesetzt, um einen aktuellen Block von Spektralkomponenten zu erhalten. Hierauf werden die Spektralkomponenten des aktuellen Blocks von Spektralkomponenten unter Verwendung von Informationen aus Abtastwerten des zu charakterisierenden Signals, die dem aktuellen Block vorausgehen, also unter Verwendung von Vergangenheitsinformationen, prädiziert. Daraufhin wird ein Prädiktionsfehler bestimmt, aus dem dann ein Tonalitätsmaß abgeleitet werden kann.

Eine weitere Möglichkeit zur Bestimmung der Tonalität ist in dem US-Patent Nr. 5,918,203 beschrieben. Wieder wird eine positive reellwertige Darstellung des Spektrums des zu charakterisierenden Signals verwendet. Diese Darstellung kann die Beträge, die Betragsquadrate etc. der Spektralkomponten umfassen. Bei einem Ausführungsbeispiel werden die Beträge oder Betragsquadrate der Spektralkomponenten zunächst logarithmisch komprimiert und dann mit einem Filter mit differenzierender Charakteristik gefiltert, um einen Block von differenzierend gefilterten Spektralkomponenten zu erhalten.

Bei einem anderen Ausführungsbeispiel werden die Beträge der Spektralkomponenten zunächst mit einem Filter mit differenzierender Charakteristik gefiltert, um einen Zähler zu erhalten, und dann mit einem Filter mit integrierender Charakteristik gefiltert, um einen Nenner zu erhalten. Der Quotient aus einem differenzierend gefilterten Betrag einer Spektralkomponente und dem integrierend gefilterten Betrag derselben Spektralkomponente ergibt dann den Tonalitätswert für diese Spektralkomponente.

Durch diese beiden Vorgehensweisen werden langsame Änderungen zwischen benachbarten Beträgen von Spektralkomponenten unterdrückt, während abrupte Änderungen zwischen benachbarten Beträgen von Spektralkomponenten im Spektrum hervorgehoben werden. Langsame Änderungen zwischen benachbarten Beträgen von Spektralkomponenten deuten auf atonale Signalkomponenten hin, während abrupte Änderungen auf tonale Signalkomponenten hinweisen. Die logarithmisch komprimierten und differenzierend gefilterten Spektralkomponenten bzw. die Quotienten können dann wiederum dazu verwendet werden, um ein Tonalitätsmaß für das betrachtete Spektrum zu berechnen.

Obgleich im vorherigen Text davon gesprochen wurde, daß ein Tonalitätswert pro Spektralkomponente berechnet wird, wird es im Hinblick auf einen geringeren Rechenaufwand bevorzugt, beispielsweise immer die Betragsquadrate zweier benachbarter Spektralkomponenten zu addieren und dann für jedes Ergebnis der Addition einen Tonalitätswert durch eines der genannten Verfahren zu berechnen. Jede Art einer additiven Gruppierung von Betragsquadraten bzw. Beträgen von Spektralkomponenten kann verwendet werden, um Tonalitätswerte für mehr als eine Spektralkomponente zu berechnen.

Eine weitere Möglichkeit zur Bestimmung der Tonalität einer Spektralkomponente besteht darin, den Pegel einer Spektralkomponente mit einem Mittelwert von Pegeln von Spektralkomponenten in einem Frequenzband zu vergleichen. Die Breite des Frequenzbands, in dem die eine Spektralkomponente liegt, deren Pegel mit dem Mittelwert z. B. der Beträge oder Betragsquadrate der Spektralkomponenten verglichen wird, kann je nach Anforderung gewählt werden. Eine Möglichkeit besteht beispielsweise darin, daß das Band schmal gewählt wird. Alternativ könnte das Band auch breit gewählt werden, oder auch nach psychoakustischen Gesichtspunkten. Dadurch kann der Einfluß kurzzeitiger Leistungseinbrüche im Spektrum vermindert werden.

Obgleich im vorhergehenden die Tonalität eines Audiosignals anhand seiner Spektralkomponenten bestimmt wurde, kann dies auch im Zeitbereich, also unter Verwendung der Abtastwerte des Audiosignals geschehen. Hierzu könnte eine LPC-Analyse des Signals durchgeführt werden, um einen Prädiktionsgewinn für das Signal abzuschätzen. Der Prädiktionsgewinn ist umgekehrt proportional zu dem SFM und ist ebenfalls ein Maß für die Tonalität des Audiosignals.

Bei einem bevorzugten Ausführungsbeispiel der vorliegenden Erfindung wird nicht nur ein Wert pro Kurzzeitspektrum angegeben, sondern das Tonalitätsmaß ist ein mehrdimensionaler Vektor von Tonalitätswerten. So kann beispielsweise das Kurzzeitspektrum in vier aneinander angrenzende und vorzugsweise nicht überlappende Bereiche bzw. Frequenzbänder aufgeteilt werden, wobei für jedes Frequenzband ein Tonalitätswert ermittelt wird. Damit wird für ein Kurzzeitspektrum des zu charakterisierenden Signals ein 4-dimensionaler Tonalitätsvektor erhalten. Um eine bessere Charakterisierung zu erlauben, würde es ferner bevorzugt, beispielsweise vier aufeinanderfolgende Kurzzeitspektren wie oben beschrieben zu bearbeiten, so daß sich insgesamt ein Tonalitätsmaß ergibt, das ein 16-dimensionaler Vektor oder allgemein ein n x m-dimensionaler Vektor ist, wobei n für die Anzahl der Tonalitätskomponenten pro Frame oder Block von Abtastwerten steht, während m für die Anzahl von betrachteten Blöcken bzw. Kurzzeitspektren steht. Das Tonalitätsmaß wäre dann, wie ausgeführt, ein 16-dimensionaler Vektor. Um den zeitlichen Verlauf des zu charakterisierenden Signals besser zu berücksichtigen, wird es ferner bevorzugt, mehrere derartige beispielsweise 16-dimensionale Vektoren zu errechnen und dann statistisch zu verarbeiten, um beispielsweise Varianz, Mittelwert oder Zentralmomente höherer Ordnung aus sämtlichen n x m-dimensionalen Tonalitätsvektoren eines Stücks mit einer bestimmten Länge zu berechnen, um dieses Stück dadurch zu indexieren.

Allgemein gesagt kann die Tonalität somit aus Teilen des gesamten Spektrums berechnet werden. Damit ist es möglich, die Tonalität/Rauschartigkeit eines Teilspektrums bzw. mehrerer Teilspektren zu bestimmen und somit eine feinere Charakterisierung des Spektrums und somit des Audiosignals zu erzielen.

Ferner können Kurzzeitstatistiken aus Tonalitätswerten, wie z.B. Mittelwert, Varianz und Zentralmomente höherer Ordnung, als Tonalitätsmaß berechnet werden. Diese werden mittels statistischer Techniken anhand einer zeitlichen Folge von Tonalitätswerten bzw. Tonalitätsvektoren ermittelt und liefern damit eine Essenz über einen längeren Abschnitt eines Stückes.

Darüber hinaus können auch Differenzen von zeitlich aufeinanderfolgenden Tonalitätsvektoren oder linear gefilterte Tonalitätswerte verwendet werden, wobei als lineare Filter beispielsweise IIR-Filter oder FIR-Filter eingesetzt werden können.

Auch bei der Berechnung des SFM wird es aus Rechenzeitersparnisgründen bevorzugt, beispielsweise zwei frequenzmäßig benachbarte Betragsquadrate zu addieren oder zu mitteln und die SFM-Berechnung auf dieser vergrößerten positiven und reellwertigen Spektraldarstellung durchzuführen. Dies führt ferner zu einer größeren Robustheit gegenüber schmalbandigen Frequenzeinbrüchen sowie zu einem geringeren Rechenaufwand.

Wieder bezugnehmend auf Fig. 1 wird nachfolgend näher auf die Einrichtung 12 zum Einstellen eines Fingerabdruckmodus der vorbestimmten Fingerabdruckmodi eingegangen. Der Einrichtung 12 fällt die Aufgabe zu, den für eine bestimmte Anwendung am besten geeigneten Fingerabdruckmodus aus der Mehrzahl von vordefinierten Fingerabdruckmodi auszuwählen und einzustellen. Die Auswahl kann entweder empirisch erfolgen, oder aber automatisch durch fest vorgegebene Überprüfungs-Matching-Operationen. Bei solchen Überprüfungs-Matching-Operationen werden z.B. mehrere bekannte Audiosignale gemäß verschiedener Fingerabdruckmodi verarbeitet, um verschiedene kennzeichnungskräftige Fingerabdrücke zu erzeugen. Mit diesen verschiedenen Fingerabdrücken, die jedoch alle die gleiche Art von Fingerabdruck darstellen, nämlich beispielsweise die Tonalität bzw. ein Tonalitätsmaß des Audiosignals, wird dann in einer Datenbank eine Muster-Matchingoperation durchgeführt. Anhand einer vorgegebenen Schwelle von Fehlerausgaben für die einzelnen Fingerabdrükke kann dann einer der vorbestimmten Fingerabdruckmodi ausgewählt werden, der z. B. ein Schwellenkriterium erfüllt.

Alternativ kann die Einrichtung 12 unabhängig von Schwellenwerten, sondern beispielsweise diktiert durch einen Übertragungskanal den Fingerabdruckmodus auswählen, der einen Fingerabdruck liefert, der aufgrund seiner Datenmenge z.B. gerade noch über einen bandbegrenzten Übertragungskanal übertragen werden kann. Je nach Kanalbelegung bzw. verfügbarer Kanalkapazität kann dann entweder ein kennzeichnungskräftiger oder, wenn der Kanal stark belegt ist bzw. stark bandbegrenzt ist, ein relativ kennzeichnungsschwacher Fingerabdruckmodus eingestellt werden.

Dasselbe gilt für den Fall, bei dem der Fingerabdruck nicht übertragen werden soll, sondern gespeichert werden soll. Je nach verfügbaren Speicherressourcen kann dann ein speicherintensiver und damit kennzeichnungskräftiger Fingerabdruckmodus oder ein speichersparender aber relativ kennzeichnungsschwacher Fingerabdruckmodus von der Einrichtung 12 eingestellt werden.

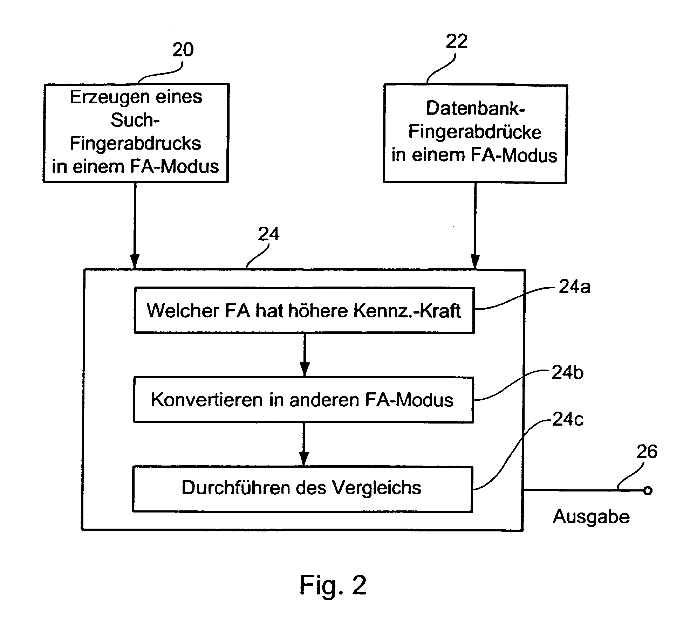

Fig. 2 zeigt ein Blockschaltbild einer erfindungsgemäßen Vorrichtung zum Charakterisieren eines Audiosignals. Eine solche Vorrichtung umfaßt eine Einrichtung zum Erzeugen eines Such-Fingerabdrucks in einem der vorbestimmten Fingerabdruckmodi. Diese Einrichtung ist in Fig. 2 mit dem Bezugszeichen 20 bezeichnet und ist vorzugsweise so ausgeführt, wie es in Verbindung mit Fig. 1 beschrieben worden ist. Die Vorrichtung zum Charakterisieren eines Audiosignals umfaßt ferner eine Datenbank 22, in der Datenbank-Fingerabdrücke gespeichert sind, die ebenfalls in einem der vorbestimmten Fingerabdruck-Modi berechnet worden sind.

Die in Fig. 2 gezeigte Vorrichtung umfaßt ferner eine Einrichtung 24 zum Vergleichen des Such-Fingerabdrucks, der durch die Einrichtung 20 erzeugt worden ist, mit den Datenbank-Fingerabdrücken. Zunächst wird in einer Einrichtung 24a festgestellt, ob der Such-Fingerabdruck und der mit demselben zu vergleichende Datenbank-Fingerabdruck dieselbe Kennzeichnungskraft haben, d.h. durch denselben Fingerabdruckmodus erzeugt worden sind, oder ob der Such-Fingerabdruck gemäß einem anderen Fingerabdruckmodus erzeugt worden ist als der Datenbank-Fingerabdruck. Wird festgestellt, daß einer der Fingerabdrücke eine höhere Kennzeichnungskraft hat als der andere, wird in einer Einrichtung 24b eine Konversion durchgeführt, derart, daß nach der Konversion sowohl der Such-Fingerabdruck als auch der Datenbank-Fingerabdruck dieselbe Kennzeichnungskraft haben, d.h. vergleichbar sind oder gemäß demselben Fingerabdruck-Modus vorliegen. Erst dann, wenn diese Voraussetzung erfüllt ist, wird eine Einrichtung 24c einen Vergleich der beiden Fingerabdrücke durchführen. Ein solcher Vergleich wird dann gegebenenfalls als Ausgabe 26 ergeben, daß das Audiosignal, das durch den Such-Fingerabdruck dargestellt ist, dem Audiosignal entspricht, das durch den aktuellen Datenbank-Fingerabdruck dargestellt ist. Alternativ kann die Ausgabe 26 auch darin bestehen, daß eine Ähnlichkeit mit einer gewissen Wahrscheinlichkeit, d.h. ein Ähnlichkeitsmaß, festgestellt wird.

Vorzugsweise ist die Einrichtung 24a angeordnet, um festzustellen, welcher Fingerabdruck die höhere Kennzeichnungskraft hat. Dieser Fingerabdruck wird dann auf die Kennzeichnungskraft, d.h. auf den Fingerabdruckmodus des Fingerabdrucks herunterskaliert, der die niedrigere Kennzeichnungskraft der beiden Fingerabdrücke hat. Alternativ, wenn es beispielsweise aus Gründen der schnellen Suche erwünscht ist, können beide Fingerabdrücke in einen Fingerabdruckmodus herunterskaliert werden, der kennzeichnungsschwächere Fingerabdrücke liefert als es der Such-Fingerabdruck und der Datenbankfingerabdruck sind.

Je nach Anwendung kann es auch erforderlich sein, den Fingerabdruck mit der niedrigeren Kennzeichnungskraft z.B. mittels Interpolation heraufzuskalieren, wobei diese Alternative jedoch nur dann sinnvolle Ergebnisse liefert, wenn die Art des Fingerabdrucks eine Interpolation erlaubt.

Wie es bereits ausgeführt worden ist, existieren widersprüchliche Anforderungen bei der Festlegung des Fingerabdruck-Modus. Einerseits ist es von hohem Interesse, eine möglichst große Datenreduktion zu erreichen, d.h. eine kleine Fingerabdruckgröße, um möglichst viele solche Fingerabdrücke im Speicher eines Rechners halten zu können sowie die weitere Verarbeitung effizienter zu machen.

Andererseits wächst mit sinkender Fingerabdruck-Größe die Gefahr, daß zwischen den in der Datenbank registrierten Stücken nicht mehr korrekt unterschieden werden kann. Dies gilt insbesondere bei einer großen Audio-Stücke-Datenbank, welche beispielsweise 500.000 Titel umfassen kann sowie bei Anwendungen, in denen die Audio-Stücke starken Verzerrungen vor dem Erkennungsvorgang ausgesetzt sind, beispielsweise bei akustischer Übertragung des Signals oder bei einer verlustbehafteten Kompression.

Natürlich wäre es möglich, aus diesem Grund kompaktere Fingerabdruck-Formate, die weniger robust sind, und weniger kompakte Formate, die entsprechend bessere Diskriminanzeigenschaften bieten, zu definieren. Dies erfordert aber, wie es ausgeführt worden ist, daß die aufwendigen Fingerabdruck-Datenbanken mehrere Male, d.h. in jedem Format einmal erstellt und vorrätig gehalten werden müssen, zumal eine Beschreibung in einem ersten Fingerabdruck-Typ im allgemeinen nicht mit einem Fingerabdruck eines anderen Typs verglichen werden kann.

Die vorliegende Erfindung liefert, um diese Probleme auszuräumen, ein universelles skalierbares Beschreibungsformat, das je nach Anwendung auf flexible Weise einen unterschiedlichen Kompromiß zwischen Kennzeichnungsstärke und Kompaktheit des Fingerabdrucks liefert, ohne daß die Eigenschaft der Vergleichbarkeit der Fingerabdrücke verloren geht. Vorzugsweise wird dies durch eine Skalierbarkeit in zwei Dimensionen erreicht, wobei eine Dimension die Skalierbarkeit in der Bänderanzahl und die andere Dimension die Skalierbarkeit in der Zeit ist. Allgemein baut die Skalierbarkeit in der Bänderanzahl auf einer spektralen Zerlegung des Audiosignals auf. Der Frequenzraum des Audiosignals bzw. eine Teilmenge davon, beispielsweise 250 Hz bis 4 kHz, wird in Frequenzbänder eingeteilt, in denen die Fingerabdrücke auf der Basis der betrachteten Merkmale, z.B. des Tonalitätsma-βes, berechnet werden. Durch die Frequenztrennung liegt in jedem der Bänder eine unabhängige Information über die Charakteristik des Signals vor. Alle Fingerabdrücke benutzen die gleiche Bandeinteilung und starten vorzugsweise von der gleichen unteren Grenzfrequenz. Ein Fingerabdruckmodus, der einen kompakten Fingerabdruck mit geringerer Kennzeichnungskraft liefert, enthält jedoch weniger Bänder und damit einen geringeren Frequenzumfang als ein großzügigerer Fingerabdruckmodus, der jedoch eine weniger kompakte Form hat. Trotzdem können beide Beschreibungsarten ohne Neuverarbeitung des Audiosignals in ihren gemeinsamen Frequenzbändern sinnvoll verglichen werden.

Eine bevorzugte Ausführungsform besteht in der Verwendung einer zumindest teilweisen logarithmischen Bandeinteilung, die für nicht zu niedrige Frequenzen, beispielsweise für Frequenzen größer als 500 Hz, eng an die vom menschlichen Gehör benutzte Frequenzskala bzw. Frequenzauflösung angelehnt ist. Es wird bevorzugt, erst ab z. B. 500 Hz die oben genannte logarithmische Einteilung zu verwenden und die Bänder unterhalb 500 Hz z. B. gleich breit einzuteilen, wie z. B. in fünf Bänder je 100 Hz. Diese Einteilung entspricht in etwa der Bark-Skala.

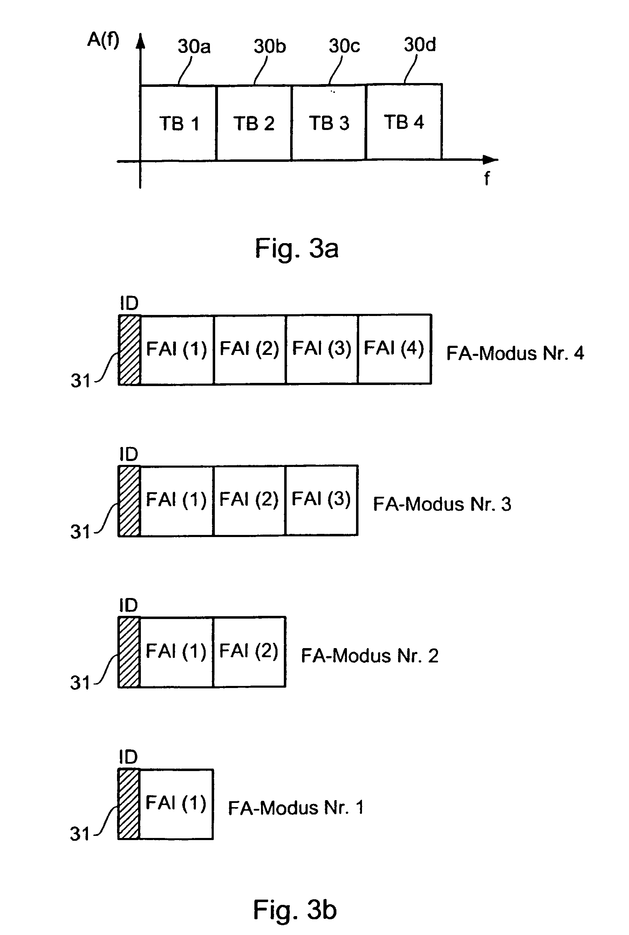

Nachfolgend wird anhand der Figuren 3a und 3b ein Beispiel für die Skalierbarkeit in der Bänderanzahl gegeben. Aus Darstellungsgründen ist, wie es in Fig. 3a gezeigt ist, ein Audiosignal in vier Teilbänder 30a bis 30d aufgeteilt. Fig. 3b zeigt verschiedene Fingerabdruckdarstellungen, wie sie durch verschiedene Fingerabdruckmodi erzeugt werden können. Jede Fingerabdruckdarstellung von Fig. 3b enthält einen Identifiziererabschnitt 31, der anzeigt, für wieviele Teilbänder Fingerabdruckinformationen enthalten sind, d.h. nach welchem Fingerabdruckmodus der betreffende Fingerabdruck erzeugt worden ist. Der Fingerabdruckmodus Nr. 4 liefert die speicherintensivste, aber auch kennzeichnungskräftigste Fingerabdruckdarstellung, da die Fingerabdruckdarstellung Fingerabdruckinformationen (FAI) sowohl für das Teilband 1 als auch für die anderen drei Teilbänder 2 bis 4 enthält. Der Fingerabdruckmodus Nr. 3 liefert dagegen eine etwas kompaktere, jedoch bereits kennzeichnungsschwächere Fingerabdruckdarstellung, da separate Fingerabdruckinformationen lediglich für die ersten drei Teilbänder enthalten sind. Der Fingerabdruckmodus Nr. 2 liefert eine relativ kompakte jedoch noch weniger kennzeichnungskräftigere Darstellung, da Fingerabdruckinformationen lediglich für die beiden untersten Teilbänder enthalten sind. Der Fingerabdruckmodus Nr. 1 liefert dagegen eine sehr kompakte jedoch am wenigsten kennzeichnungsstarke Fingerabdruckdarstellung, da nur Fingerabdruckinformationen des niedrigsten Teilbandes 30a enthalten sind.

Im nachfolgenden wird anhand von Fig. 3b auf die Funktion des Blocks 24b von Fig. 2, also auf die Fingerabdruckkonversion von einem Fingerabdruckmodus in einen anderen Fingerabdruckmodus eingegangen. Lediglich beispielhaft sei angenommen, daß ein Datenbank-Fingerabdruck gemäß dem Fingerabdruckmodus Nr. 4 erzeugt worden ist. Die Datenbank enthält also sehr kennzeichnungsstarke Fingerabdrücke. Ein Such-Fingerabdruck ist beispielsweise gemäß dem Fingerabdruckmodus Nr. 2 erzeugt worden. Nachdem die -Einrichtung 24a von Fig. 2 beispielsweise anhand des Fingerabdruckidentifizierers 31 von Fig. 3b festgestellt hat, daß der Such-Fingerabdruck und der Datenbank-Fingerabdruck gemäß unterschiedlichen Fingerabdruckmodi erzeugt worden sind, wird der Fingerabdruck mit der höheren Kennzeichnungskraft, also der Datenbank-Fingerabdruck einer Konversion unterzogen. Die Konversion besteht bei dem in Fig. 3b gezeigten Ausführungsbeispiel darin, daß die Fingerabdruckinformationen des dritten Teilbandes und die Fingerabdruckinformationen des vierten Teilbandes des Datenbank-Fingerabdruckmodus nicht mehr weiter berücksichtigt werden, also bei der Matching-Operation keine Rolle spielen. Es werden also lediglich Fingerabdruckinformationen des ersten Teilbandes und Fingerabdruckinformationen des zweiten Teilbands miteinander verglichen. Alternativ könnten auch der Datenbank-Fingerabdruck, der gemäß dem Fingerabdruck-Modus Nr. 4 erzeugt worden ist, und der Such-Fingerabdruck, der gemäß dem Fingerabdruck-Modus Nr. 2 erzeugt worden ist, beide in den Fingerabdruck-Modus Nr. 1 konvertiert werden, was insbesondere dann von Vorteil ist, wenn eine schnelle Matching-Operation gewünscht wird.

Es sei darauf hingewiesen, daß es nicht wesentlich ist, daß der Datenbank-Fingerabdruck kennzeichnungskräftiger als der Such-Fingerabdruck ist. Existiert nur beispielsweise eine ältere kennzeichnungsschwächere Datenbank, während die Such-Fingerabdrücke kennzeichnungsstärkere Fingerabdrücke sind, so kann umgekehrt vorgegangen werden, derart, daß die Such-Fingerabdrücke in eine kennzeichnungsschwächere aber kompaktere Form konvertiert werden, und daß dann die Matching-Operation ausgeführt wird.

Obgleich in Fig. 3a die Teilbänder 1 bis 4 (30a bis 30d nicht-überlappend) gezeichnet sind, sei darauf hingewiesen, daß bereits eine kleine Überlappung der Teilbänder zu einer höheren Robustheit der Tonhöhenänderungen führt. Um die Robustheit der Darstellung gegenüber Signalveränderungen zu erhöhen, die eine Änderung der Signaltonhöhe beinhalten, beispielsweise eine Abtastratenkonvertierung oder eine Tonhöhenänderung eines Signals, das etwas schneller oder langsamer abgespielt wird, wird eine gewisse Bandüberlappung bevorzugt. Bei einer Tonhöhenänderung tritt die Problematik auf, daß Signalanteile, die sich bei einem unveränderten Signal in einem gewissen Frequenzband (n) befinden, durch die Frequenzänderung, beispielsweise eine Streckung oder Stauchung des Spektrums, unter Umständen in dem Band n-1 oder n+1 zum Liegen kommen, so daß deutlich andere Merkmalswerte entstehen und die Erkennungsrate entsprechend sinkt. Bei dem bevorzugten Ausführungsbeispiel der vorliegenden Erfindung wird dieser Effekt dadurch gemindert, daß zwischen benachbarten Bändern ein gewisser Frequenzbereich ist, z.B. indem eine Anzahl von DFT-Linien in beiden Frequenzbändern verwendet werden. Als Anhaltspunkt wird eine Überlappung der Frequenzbereiche um z.B. 10 % bevorzugt, wobei diese größer gewählt werden kann, wenn stärkere Streckungen oder Stauchungen des Spektrums zu erwarten sind.

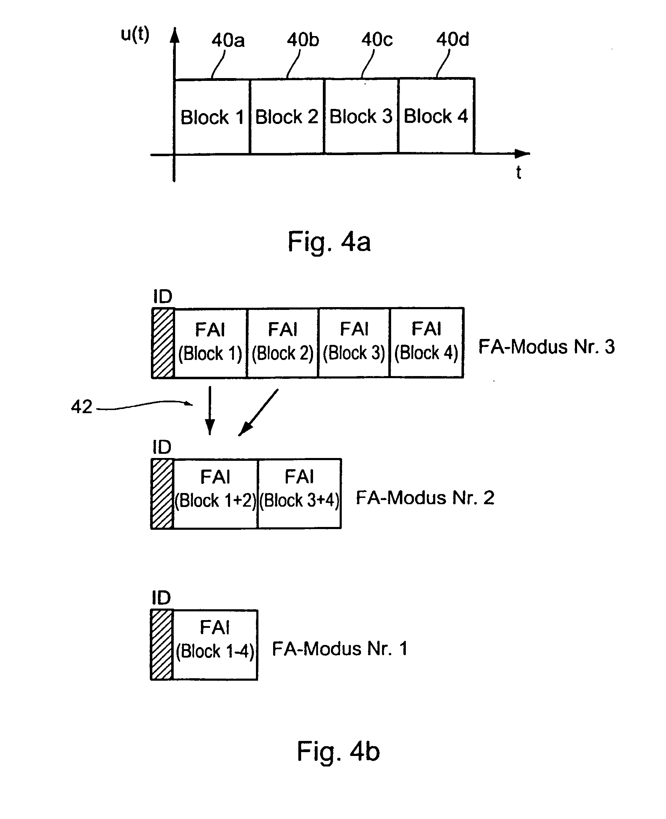

Eine weitere Dimension der Skalierbarkeit ist durch die Zeit gegeben. Durch die Verwendung von Mittelwert und Varianz zur Zusammenfassung einer Anzahl n einzelner Merkmalswerte kann die zeitliche Granularität des Fingerabdrucks eingestellt werden. Eine kompakte Beschreibung wählt einen größeren Wert für n und damit eine größere zeitliche Zusammenfassung als eine großzügigere, jedoch weniger kompakte Beschreibung. Um dies zu veranschaulichen, wird im nachfolgenden auf die Figuren 4a und 4b eingegangen. Fig. 4a zeigt eine blockweise Verarbeitung eines Audiosignals u(t) über der Zeit t, wobei aus Übersichtlichkeitsgründen vier zeitlich aufeinanderfolgende Blöcke 40a bis 40d dargestellt sind. Die Blöcke 40a bis 40d haben alle dieselbe Länge, d.h. dieselbe Anzahl von Abtastwerten. Ein Fingerabdruckmodus Nr. 3 wird eine sehr kennzeichnungsstarke Darstellung liefern, da für jeden Block 1 bis Block 4 eigene Fingerabdruckinformationen berechnet und gespeichert werden. Dagegen liefert der Fingerabdruckmodus Nr. 2 bereits eine kennzeichnungsschwächere, jedoch speichermäßig kompaktere Fingerabdruckdarstellung, da immer die Fingerabdruckinformationen aus zwei aufeinanderfolgenden Blöcken, also einerseits aus dem Block 1 und dem Block 2 und andererseits aus dem Block 3 und dem Block 4 gebildet werden. Die speichermäßig günstigste, jedoch kennzeichnungsschwächste Fingerabdruckdarstellung liefert schließlich der Fingerabdruckmodus Nr. 1, welcher Fingerabdruckinformationen aller Blöcke 1 bis 4 umfaßt.

Wenn in einer Datenbank Fingerabdruckinformationen, die gemäß dem Fingerabdruck-Modus Nr. 3 erzeugt worden sind, abgespeichert sind, und wenn der Such-Fingerabdruck gemäß dem Fingerabdruckmodus Nr. 2 erzeugt worden ist, so wird der Datenbank-Fingerabdruck konvertiert, und zwar so, daß die ersten beiden Blöcke zusammengefaßt werden und dann mit den ersten Fingerabdruckinformationen des Such-Fingerabdrucks verglichen werden, wobei dieses Procedere für die zeitlich folgenden Blöcke 3 und 4 wiederholt wird. An dieser Stelle wäre es auch wieder möglich, sowohl den Datenbank-Fingerabdruck als auch den Such-Fingerabdruck in eine Fingerabdruckdarstellung gemäß dem Fingerabdruck-Modus Nr. 1 zu konvertieren.

In realen Anwendungen wird es bevorzugt, Fingerabdruckinformationen von n Blöcken so zusammenzufassen, daß die Fingerabdruckdarstellung den Mittelwert/oder die Varianz der Fingerabdruckinformationen der Einzelblöcke enthält. Der Mittelwert und die Varianz sind folgendermaßen definiert:

Mittelwert:

$$M_n(F) = 1/n \cdot \sum_{i=0}^{n-1} F_i$$

Varianz:

$$V_n(F) = 1/n \cdot \sum_{i=0}^{n-1} (F_i - M_n(F))^2 = \left[ 1/n \cdot \sum_{i=0}^{n-1} F_i^2 \right] - M_n(F)^2$$

In den oben genannten Gleichungen ist n ein Index, der angibt, wie viele Fingerabdruckinformationen $F_i$ von wievielen Blöcken oder Bändern etc. zusammengefaßt werden, um den Mittelwert $M_n$ aus denselben zu bilden. Bei der obigen Definition der Varianz sei darauf hingewiesen, daß die Varianz von einem Block bzw. Band, die nicht aussagekräftig ist, gleich Null ist.

Bezugnehmend auf Fig. 4b werden die Fingerabdruckinformationen des Blocks 1 der Fingerabdruckdarstellung, die durch den Fingerabdruckmodus Nr. 3 erzeugt worden ist, den Mittelwert und/oder die Varianz von Audiomerkmalen umfassen. Dasselbe würde für die Fingerabdruckinformationen für den Block 2 der Fingerabdruckdarstellung, die durch den Fingerabdruckmodus Nr. 3 erzeugt worden ist, gelten. Um nun die beiden Fingerabdruckinformationen für Block 1 und Block 2 der Fingerabdruckdarstellung gemäß Fingerabdruckmodus Nr. 3 in Fingerabdruckinformationen der Fingerabdruckdarstellung, die gemäß Fingerabdruckmodus Nr. 2 erzeugt worden ist, zu konvertieren, wie es durch Zeile 42 dargestellt ist, müssen die Fingerabdruckinformationen der Fingerabdruckdarstellung gemäß Fingerabdruckmodus Nr. 3 folgendermaßen konvertiert werden:

Mittelwert:

$$M_{2n}(F) = 0.5 \cdot \left[ M_n(F) + M'_n(F) \right]$$

Varianz:

$$V_{2n}(F) = 0.5 \cdot \left[ V_n(F) + V'_n(F) + 0.5 \cdot \left( M_n(F) - M'_n(F) \right)^2 \right]$$

Mittelwerte und Varianzen können miteinander verglichen werden, wenn die zeitliche Granularität einer Fingerabdruckdarstellung ein ganzzahliges Vielfaches der Granularität der anderen Fingerabdruckdarstellungen ist. Die obigen Gleichungen gelten für einen beispielhaften Faktor 2. In der Gleichung stellen die Größen $N_n$ und $V_n$ die entsprechenden Werte Mittelwert bzw. Varianz für die Fingerabdruckinformationen des Blocks 1 gemäß Fingerabdruck-Modus Nr. 3 dar, während $M_n'$ und $V_n'$ die Werte Mittelwert bzw. Varianz für den Block 2 der Fingerabdruckdarstellung gemäß Fingerabdruck-Modus Nr. 3 von Fig. 4b darstellen. Für den Fall, daß die Varianz als Fingerabdruckinformationen verwendet wird, muß auch der Mittelwert z. B. als weitere Fingerabdruckinformationen vorhanden sein, um die Skalierbarkeit zu gewährleisten.

Es sei darauf hingewiesen, daß analog hierzu auch die Fingerabdruckinformationen der Fingerabdruckdarstellung gemäß den Fingerabdruckinformationen gemäß Fingerabdruck-Modus Nr. 1 verglichen werden zu können.

Damit können Fingerabdruckdarstellungen unterschiedlicher zeitlicher Granularität, also gemäß unterschiedlicher Fingerabdruckmodi, z.B. durch Umwandlung der feineren in eine gröbere Darstellung, verglichen werden.

Die erfindungsgemäße Fingerabdruckdarstellung kann beispielsweise als sogenannte Scalable Series definiert werden, wie sie in Absatz 4.2 des Dokuments ISO/IEC JTC 1/SC 29/WG11 (MPEG), Information technology - multimedia content description interface- Part 4: Audio, 27. 10. 2000, beschrieben ist.

## Patentansprüche

1. Verfahren zum Erzeugen eines Fingerabdrucks eines Audiosignals unter Verwendung von Modusinformationen (10), die eine Mehrzahl von vorbestimmten Fingerabdruck-Modi definieren, wobei sich die Fingerabdruck-Modi alle auf dieselbe Art des Fingerabdrucks beziehen, wobei die Fingerabdruck-Modi jedoch verschiedene hinsichtlich der Zeit und/oder der Frequenz skalierbare Fingerabdrücke liefern, die sich in ihrer Datenmenge einerseits und ihrer Kennzeichnungsstärke zum Charakterisieren des Audiosignals andererseits unterscheiden, wobei sich Fingeabdruck untereinander dadurch unterscheinden, dass sie separate Finderabdrukinformationen für eine unterschiedliche Anzahl von Teilbändern, oder wobei der skalierbare Fingerabdruck Fingerabdruckinformationen eine vorn Fingerabdruck abhängige A,zahl von zeitlichen Biöcken aufweist, mit folgenden Schritten:

   Einstellen (12) eines vorbestimmten Fingerabdruck-Modus aus der Mehrzahl von vorbestimmten Fingerabdruck-Modi; und
   Berechnen (14) eines skalierbaren Fingerabdrucks gemäß dem eingestellten vorbestimmten Fingerabdruck-Modus unter Anwendung von Berechnungsvorschriften gemäß den Modusinformationen für den eingestellten Fingerabdruck-Modus.

2. Verfahren gemäß Anspruch 1, bei dem der Fingerabdruck gemäß einem Fingerabdruck-Modus mit höherer Kennzeichnungskraft in einen Fingerabdruck gemäß einem Fingerabdruck-Modus mit einer niedrigeren Kennzeichnungskraft konvertierbar ist.

3. Verfahren nach Anspruch 1 oder 2, das ferner folgenden Schritt aufweist:

   Übertragen oder Speichern des erzeugten Fingerabdrucks über einen Übertragungskanal mit begrenzter Übertragungskapazität bzw. auf einem Speichermedium mit begrenzter Speicherkapazität,
   wobei im Schritt des Einstellens (12) eines Fingerabdruck-Modus der vorbestimmten Fingerabdruck-Modi abhängig von dem Übertragungskanal bzw. von der Speicherkapazität eingestellt wird.

4. Verfahren nach einem der vorhergehenden Ansprüche, bei dem die Art des Fingerabdrucks sich auf Tonalitätseigenschaften des Audiosignals bezieht.

5. Verfahren nach einem der vorhergehenden Ansprüche, bei dem das Audiosignal in eine vorbestimmte Anzahl von vordefinierten Frequenzbändern (30a bis 30d) zerlegbar ist,
   bei dem jeder Fingerabdruck-Modus die Erzeugung von Fingerabdruckinformationen pro einem vordefinierten Frequenzband umfaßt, wobei sich die Fingerabdruck-Modi in der Anzahl von Fingerabdruckinformationen unterscheiden, so daß ein erster Fingerabdruck-Modus als Fingerabdruck separat für jedes Frequenzband eine erste Anzahl von Fingerabdruckinformationen für eine erste Anzahl von Frequenzbändern umfaßt, und ein zweiter Fingerabdruck-Modus als Fingerabdruck separat für jedes Frequenzband eine zweite Anzahl von Fingerabdruckinformationen für eine zweite Anzahl von Frequenzbändern umfaßt, wobei sich die erste Anzahl von der zweiten Anzahl unterscheidet, und wobei die vordefinierten Frequenzbänder für alle Fingerabdruck-Modi die gleichen sind.

6. Verfahren nach Anspruch 5, bei dem die Zerlegung des Audiosignals in die vordefinierten Frequenzbänder zumindest teilweise eine logarithmische Bandeinteilung aufweist.

7.  Verfahren nach Anspruch 5 oder 6, bei dem zwei frequenzmäßig benachbarte Frequenzbänder einen Überlappungsbereich haben, wobei Spektralkomponenten in dem Überlappungsbereich zu beiden benachbarten Frequenzbändern gehören.

8.  Verfahren nach einem der Ansprüche 5 bis 7,
    Bei dem das Frequenzband, das die kleinste Frequenz umfaßt, in allen Fingerabdruck-Modi enthalten ist, wobei sich die Fingerabdruck-Modi in der Anzahl der zu höheren Frequenzen folgender Frequenzbänder unterscheiden.

9.  Verfahren nach einem der Ansprüche 1 bis 8,
    bei dem das Audiosignal in zeitlich aufeinanderfolgende Blöcke (40a bis 40d) einer vorbestimmten Länge zerlegbar ist,
    bei dem beim Erzeugen eines Fingerabdrucks Fingerabdruckinformationen pro einem Block ermittelt werden, wobei sich die Fingerabdruck-Modi in der Anzahl von Blöcken unterscheiden, die durch Fingerabdruckinformationen dargestellt sind, und wobei die Länge der Blöcke für alle Fingerabdruck-Modi gleich ist.

10. Verfahren nach Anspruch 9, bei dem in einem ersten Fingerabdruck-Modus als Fingerabdruckinformationen der Mittelwert und/oder die Varianz aus einer ersten vordefinierten Anzahl von Blöcken umfaßt sind, und ein zweiter Fingerabdruck-Modus den Mittelwert und/oder die Varianz aus einer zweiten vordefinierten Anzahl von Blöcken umfaßt, wobei die erste vordefinierte Anzahl und die zweite vordefinierte Anzahl in einem ganzzahligen Verhältnis zueinander stehen.

11. Verfahren zum Charakterisieren eines Audiosignals, mit folgenden Schritten:

    Erzeugen eines Such-Fingerabdrucks des Audiosignals unter Verwendung von Modusinformationen (10), die eine Mehrzahl von vorbestimmten Fingerabdruck-Modi definieren, wobei sich die Fingerabdruck-Modi alle auf dieselbe Art des Fingerabdrucks beziehen, wobei die Fingerabdruck-Modi jedoch verschiedene hinsichtlich der Zeit und/oder der Frequenz skalierbare Fingerabdrücke liefern, die sich in ihrer Datenmenge einerseits und ihrer Kennzeichnungsstärke zum Charakterisieren des Audiosignals andererseits unterscheiden, wobei sich die Fingerabdruck-Modi untereinander dadurch unterscheiden, dass sie separate Fingerabdruckinformationen für eine unterschiedliche Anzahl von Teilbändern umfassen, oder wobei der skalierbare Fingerabdruck Fingerabdruckinformationen für eine vom Fingerabdruck-Modus abhängige Anzahl von zeitlichen Blöcken aufweist, mit folgenden Schritten:

    Einstellen (12) eines vorbestimmten Fingerabdruck-Modus aus der Mehrzahl von vorbestimmten Fingerabdruck-Modi; und
    Berechnen (14) eines skalierbaren Fingerabdrucks gemäß dem eingestellten vorbestimmten Fingerabdruck-Modus unter Anwendung von Berechnungsvorschriften gemäß den Modusinformationen für den eingestellten Fingerabdruck-Modus;

    Vergleichen (24) des berechneten Fingerabdrucks mit einer Mehrzahl von gespeicherten Fingerabdrücken, die bekannte Audiosignale darstellen, um das Audiosignal zu charakterisieren, wobei die gespeicherten Fingerabdrücke gemäß einem der Mehrzahl von Fingerabdruck-Modi erzeugt worden sind, wobei der Schritt des Vergleichens (24) folgende Teilschritte aufweist:

    Untersuchen (24a), ob der Such-Fingerabdruck und der Datenbank-Fingerabdruck gemäß unterschiedlichen Fingerabdruck-Modi erzeugt worden sind;
    Konvertieren (24b) des Such-Fingerabdrucks und/oder des Datenbank-Fingerabdrucks, so daß die zu vergleichenden Fingerabdrücke gemäß demselben Fingerabdruck-Modus vorliegen; und
    Durchführen (24c) des Vergleichs unter Verwendung der in dem gleichen Fingerabdruck-Modus vorliegenden Fingerabdrücke.

12. Verfahren nach Anspruch 11, bei dem jeder Fingerabdruck-Modus die Erzeugung von Fingerabdruckinformationen pro einem vordefinierten Frequenzband umfaßt, wobei sich die Fingerabdruck-Modi in der Anzahl von Fingerabdruckinformationen unterscheiden, so daß ein erster Fingerabdruck-Modus als Fingerabdruck separat für jedes Frequenzband eine erste Anzahl von Fingerabdruckinformationen für eine erste Anzahl von Frequenzbändern umfaßt, und ein zweiter Fingerabdruck-Modus als Fingerabdruck separat für jedes Frequenzband eine zweite Anzahl von Fingerabdruckinformationen für eine zweite Anzahl von Frequenzbändern umfaßt, wobei sich die erste Anzahl von der zweiten Anzahl unterscheidet,

wobei der Schritt des Konvertierens (24b) das Unterdrücken von Fingerabdruckinformationen für Teilbänder aufweist.

**13.** Verfahren nach Anspruch 11,
bei dem das Audiosignal in zeitlich aufeinanderfolgende Blöcke (40a bis 40d) einer vorbestimmten Länge zerlegbar ist,
bei dem beim Erzeugen eines Fingerabdrucks Fingerabdruckinformationen pro einem Block ermittelt werden, wobei sich die Fingerabdruck-Modi in der Anzahl von Blöcken unterscheiden, die durch Fingerabdruckinformationen dargestellt sind, und wobei die Länge der Blöcke für alle Fingerabdruck-Modi gleich ist, und
bei dem der Schritt des Konvertierens (24b) den Schritt des Zusammenfassens der Fingerabdruckinformationen von zeitlich aufeinanderfolgenden Blöcken aufweist.

**14.** Verfahren nach Anspruch 13,
bei dem die Fingerabdruckinformationen einen Mittelwert und/oder eine Varianz umfassen, und
bei dem ein ganzzahliges Verhältnis zwischen den in dem Such-Fingerabdruck zusammengefaßten Blöcken und den in dem Datenbank-Fingerabdruck zusammengefaßten Blöcken existiert.

**15.** Fingerabdruckdarstellung für ein Audiosignal, mit folgenden Merkmalen:

einem hinsichtlich der Zeit und/oder der Frequenz skalierbaren Fingerabdruck, wobei der Fingerabdruck gemäß einem einer Mehrzahl von vorbestimmten Fingerabdruck-Modi ausgebildet ist, wobei sich die Fingerabdruck-Modi alle auf dieselbe Art des Fingerabdrucks beziehen, wobei die Fingerabdruck-Modi jedoch verschiedene hinsichtlich der Zeit und/oder der Frequenz skalierbare Fingerabdrücke liefern, die sich in ihrer Datenmenge einerseits und ihrer Kennzeichnungsstärke zum Charakterisieren des Audiosignals andererseits unterscheiden, wobei der skalierbare Fingerabdruck separate Fingerabdruckinformationen für separate Teilbänder des Audiosignals aufweist, wobei sich die Fingerabdruck-Modi untereinander dadurch unterscheiden, dass sie separate Fingerabdruckinformationen für eine unterschiedliche Anzahl von Teilbändern umfassen, oder wobei der skalierbare Fingerabdruck Fingerabdruckinformationen für eine vom Fingerabdruck-Modus abhängige Anzahl von zeitlichen Blöcken aufweist; und
einem Indikator (31), der den Fingerabdruck-Modus anzeigt, der dem Fingerabdruck zugrunde liegt.

**16.** Vorrichtung zum Erzeugen eines Fingerabdrucks eines Audiosignals unter Verwendung von Modusinformationen (10), die eine Mehrzahl von vorbestimmten Fingerabdruck-Modi definieren, wobei sich die Fingerabdruck-Modi alle auf dieselbe Art des Fingerabdrucks beziehen, wobei die Fingerabdruck-Modi jedoch verschiedene hinsichtlich der Zeit und/oder der Frequenz skalierbare Fingerabdrücke liefern, die sich in ihrer Datenmenge einerseits und ihrer Kennzeichnungsstärke zum Charakterisieren des Audiosignals andererseits unterscheiden, wobei sich die Fingerabdruck-Modi untereinander dadurch unterscheiden, dass sie separate Fingerabdruckinformationen für eine unterschiedliche Anzahl von Teilbändern umfassen, oder wobei der skalierbare Fingerabdruck Fingerabdruckinformationen für eine vom Fingerabdruck-Modus abhängige Anzahl von zeitlichen Blöcken aufweist, mit folgenden Merkmalen:

einer Einrichtung zum Einstellen (12) eines vorbestimmten Fingerabdruck-Modus aus der Mehrzahl von vorbestimmten Fingerabdruck-Modi; und
einer Einrichtung zum Berechnen (14) eines skalierbaren Fingerabdrucks gemäß dem eingestellten vorbestimmten Fingerabdruck-Modus unter Anwendung von Berechnungsvorschriften gemäß den Modusinformationen für den eingestellten Fingerabdruck-Modus.

**17.** Vorrichtung zum Charakterisieren eines Audiosignals, mit folgenden Merkmalen:

einer Einrichtung zum Erzeugen eines Such-Fingerabdrucks des Audiosignals unter Verwendung von Modusinformationen (10), die eine Mehrzahl von vorbestimmten Fingerabdruck-Modi definieren, wobei sich die Fingerabdruck-Modi alle auf dieselbe Art des Fingerabdrucks beziehen, wobei die Fingerabdruck-Modi jedoch verschiedene hinsichtlich der Zeit und/oder der Frequenz skalierbare Fingerabdrücke liefern, die sich in ihrer Datenmenge einerseits und ihrer Kennzeichnungsstärke zum Charakterisieren des Audiosignals andererseits unterscheiden, wobei sich die Fingerabdruck-Modi untereinander dadurch unterscheiden, dass sie separate Fingerabdruckinformationen für eine unterschiedliche Anzahl von Teilbändern umfassen, oder wobei der skalierbare Fingerabdruck Fingerabdruckinformationen für eine vom Fingerabdruck-Modus abhängige Anzahl von zeitlichen Blöcken aufweist, mit folgenden Teilmerkmalen:

einer Einrichtung zum Einstellen (12) eines vorbestimmten Fingerabdruck-Modus aus der Mehrzahl von vorbestimmten Fingerabdruck-Modi; und
einer Einrichtung zum Berechnen (14) eines skalierbaren Fingerabdrucks gemäß dem eingestellten vorbestimmten Fingerabdruck-Modus unter Anwendung von Berechnungsvorschriften gemäß den Modusinformationen für den eingestellten Fingerabdruck-Modus;

einer Einrichtung zum Vergleichen des berechneten Fingerabdrucks mit einer Mehrzahl von gespeicherten Fingerabdrücken, die bekannte Audiosignale darstellen, um das Audiosignal zu charakterisieren, wobei die gespeicherten Fingerabdrücke gemäß einem der Mehrzahl von Fingerabdruck-Modi erzeugt worden sind, mit folgenden Teilmerkmalen:

einer Einrichtung zum Untersuchen (24a), ob der Such-Fingerabdruck und der Datenbank-Fingerabdruck gemäß unterschiedlichen Fingerabdruck-Modi erzeugt worden sind;
einer Einrichtung zum Konvertieren (24b) des Such-Fingerabdrucks und/oder des Datenbank-Fingerabdrucks, so daß die zu vergleichenden Fingerabdrücke gemäß demselben Fingerabdruck-Modus vorliegen; und
einer Einrichtung zum Durchführen (24c) des Vergleichs unter Verwendung der in dem gleichen Fingerabdruck-Modus vorliegenden Fingerabdrücke.

**Claims**

1. Method for producing a fingerprint of an audio signal using modus information (10) defining a plurality of predetermined fingerprint modi, all of the fingerprint modi relating to the same type of fingerprint, the fingerprint modi, however, providing different fingerprints scalable with regard to time and/or frequency differing from each other with regard to their data volume, on the one hand, and to their characterizing strength for characterizing the audio signal, on the other hand, the fingerprint modi differing from each other in that they include separate fingerprint information for a different number of sub-bands, or the scalable fingerprint comprising fingerprint information for a number of temporal blocks depending on the fingerprint modus, the method comprising:

setting (12) a predetermined fingerprint modus of the plurality of predetermined fingerprint modi; and
computing (14) a scalable fingerprint in accordance with the set predetermined fingerprint modus by applying computing regulations in accordance with the modus information for the set fingerprint modus.

2. Method as claimed in claim 1, wherein the fingerprint in accordance with a fingerprint modus having higher characterizing strength is convertible to a fingerprint in accordance with a fingerprint modus having lower characterizing strength.

3. Method as claimed in claim 1 or 2, further comprising:

transferring or storing the produced fingerprint via a transmission channel having a limited transmission capacity or on a storage medium having a limited storage capacity, respectively,
wherein in the step of setting (12) a fingerprint modus, the predetermined fingerprint modus is set depending on the transmission channel or the storage capacity, respectively.

4. Method as claimed in any one of the previous claims, wherein the type of fingerprint relates to the tonality properties of the audio signal.

5. Method as claimed in any one of the previous claims, wherein the audio signal may be subdivided into a predetermined number of predefined frequency bands (30a to 30d),
wherein each fingerprint modus includes the production of fingerprint information per predefined frequency band, the fingerprint modi differing with regard to the number of items of fingerprint information, so that a first fingerprint modus includes, as a fingerprint, separately for each frequency band, a first number of items of fingerprint information for a first number of frequency bands, and a second fingerprint modus includes, as a fingerprint, separately for each frequency band, a second number of items of fingerprint information for a second number of frequency bands, the first number differing from the second number, and the predefined frequency bands being the same for all fingerprint modi.

6. Method as claimed in claim 5, wherein the subdivision of the audio signal into the predefined frequency bands comprises, at least partially, logarithmic band partitioning.

7. Method as claimed in claim 5 or 6, wherein two frequency bands mutually adjacent in terms of frequency have an overlap area, spectral components in the overlap area belonging to both adjacent frequency bands.

8. Method as claimed in any one of claims 5 to 7, wherein the frequency band including the lowest frequency is contained in all fingerprint modi, the fingerprint modi differing in the number of higher frequencies of subsequent frequency bands.

9. Method as claimed in any one of claims 1 to 8, wherein the audio signal may be subdivided into blocks (40a to 40d) successive in time and having a predetermined length, wherein in the production of a fingerprint, fingerprint information per block are determined, the fingerprint modi differing in the number of blocks represented by fingerprint information, and the length of the blocks being the same for all fingerprint modi.

10. Method as claimed in claim 9, wherein a first fingerprint modus includes the mean value and/or the variance of a first predefined number of blocks as fingerprint information, and a second fingerprint modus includes the mean value and/or the variance of a second predefined number of blocks, the ratio of the first predefined number to the second predefined number being an integral one.

11. Method of characterizing an audio signal, comprising:

producing a fingerprint of the audio signal using modus information (10) defining a plurality of predetermined fingerprint modi, all of the fingerprint modi relating to the same type of fingerprint, the fingerprint modi, however, providing different fingerprints scalable with regard to time and/or frequency differing from each other with regard to their data volume, on the one hand, and to their characterizing strength for characterizing the audio signal, on the other hand, the fingerprint modi differing from each other in that they include separate fingerprint information for a different number of sub-bands, or the scalable fingerprint comprising fingerprint information for a number of temporal blocks depending on the fingerprint modus, the method comprising:

setting (12) a predetermined fingerprint modus of the plurality of predetermined fingerprint modi; and computing (14) a scalable fingerprint in accordance with the set predetermined fingerprint modus by applying computing regulations in accordance with the modus information for the set fingerprint modus;

comparing (24) the computed fingerprint with a plurality of stored fingerprints representing known audio signals to characterize the audio signal, the stored fingerprints having been produced in accordance with one of the plurality of fingerprint modi, the step of comparing (24) comprising:

examining (24a) whether the search fingerprint and the database fingerprint have been produced in accordance with different fingerprint modi; converting (24b) the search fingerprint and/or the database fingerprint so that the fingerprints to be compared exist in accordance with the same fingerprint modus; and performing (24c) the comparison using the fingerprints existing in the same fingerprint modus.

12. Method as claimed in claim 11, wherein each fingerprint modus includes the production of fingerprint information per predefined frequency band, the fingerprint modi differing with regard to the number of items of fingerprint information, so that a first fingerprint modus includes, as a fingerprint, separately for each frequency band, a first number of items of fingerprint information for a first number of frequency bands, and a second fingerprint modus includes, as a fingerprint, separately for each frequency band, a second number of items of fingerprint information for a second number of frequency bands, the first number differing from the second number, wherein the step of converting (24b) comprises suppressing fingerprint information for sub-bands.

13. Method as claimed in claim 11, wherein the audio signal may be subdivided into blocks (40a to 40d) successive in time and having a predetermined length,

wherein in the production of a fingerprint, fingerprint information per block are determined, the fingerprint modi differing in the number of blocks represented by fingerprint information, and the length of the blocks being the same for all fingerprint modi, and

wherein the step of converting (24b) comprises the step of combining the fingerprint information of blocks successive in time.

14. Method as claimed in claim 13,
wherein the fingerprint information includes a mean value and/or a variance, and
wherein an integer ratio exists between the blocks combined in the search fingerprint and the blocks combined in the database fingerprint.

15. Fingerprint representation for an audio signal, comprising:

a fingerprint scalable with regard to time and/or frequency, the fingerprint being configured in accordance with one of a plurality of predetermined fingerprint modi, all of the fingerprint modi relating to the same type of fingerprint, the fingerprint modi, however, providing different fingerprints scalable with regard to time and/or frequency differing from each other with regard to their data volume, on the one hand, and to their characterizing strength for characterizing the audio signal, on the other hand, the scalable fingerprint comprising separate fingerprint information for separate sub-bands of the audio signal, the fingerprint modi differing from each other in that they include separate fingerprint information for a different number of sub-bands, or the scalable fingerprint comprising fingerprint information for a number of temporal blocks depending on the fingerprint modus; and an indicator (31) indicating the fingerprint modus underlying the fingerprint.

16. Apparatus for producing a fingerprint of an audio signal using modus information (10) defining a plurality of predetermined fingerprint modi, all of the fingerprint modi relating to the same type of fingerprint,
the fingerprint modi, however, providing different fingerprints scalable with regard to time and/or frequency differing from each other with regard to their data volume, on the one hand, and to their characterizing strength for characterizing the audio signal, on the other hand, the fingerprint modi differing from each other in that they include separate fingerprint information for a different number of sub-bands, or the scalable fingerprint comprising fingerprint information for a number of temporal blocks depending on the fingerprint modus, the apparatus comprising:

means for setting (12) a predetermined fingerprint modus of the plurality of predetermined fingerprint modi; and means for computing (14) a scalable fingerprint in accordance with the set predetermined fingerprint modus by applying computing regulations in accordance with the modus information for the set fingerprint modus.

17. Apparatus for characterizing an audio signal, comprising:

means for producing a search fingerprint of the audio signal using modus information (10) defining a plurality of predetermined fingerprint modi, all of the fingerprint modi relating to the same type of fingerprint, the fingerprint modi, however, providing different fingerprints scalable with regard to time and/or frequency differing from each other with regard to their data volume, on the one hand, and to their characterizing strength for characterizing the audio signal, on the other hand, the fingerprint modi differing from each other in that they include separate fingerprint information for a different number of sub-bands, or the scalable fingerprint comprising fingerprint information for a number of temporal blocks depending on the fingerprint modus, the means comprising:

means for setting (12) a predetermined fingerprint modus of the plurality of predetermined fingerprint modi; and
means for computing (14) a scalable fingerprint in accordance with the set predetermined fingerprint modus by applying computing regulations in accordance with the modus information for the set fingerprint modus;

means for comparing the computed fingerprint with a plurality of stored fingerprints representing known audio signals to characterize the audio signal, the stored fingerprints having been produced in accordance with one of the plurality of fingerprint modi, the means comprising:

means for examining (24a) whether the search fingerprint and the database fingerprint have been produced in accordance with different fingerprint modi;
means for converting (24b) the search fingerprint and/or the database fingerprint so that the fingerprints to be compared exist in accordance with the same fingerprint modus; and

means for performing (24c) the comparison using the fingerprints existing in the same fingerprint modus.

**Revendications**

1. Procédé pour générer une empreinte digitale d'un signal audio à l'aide d'informations de mode (10) qui définissent une pluralité de modes d'empreinte digitale prédéterminés, les modes d'empreinte digitale se référant tous au même type d'empreinte digitale, les modes d'empreinte digitale fournissant toutefois des empreintes digitales échelonnables différentes en ce qui concerne le temps et/ou la fréquence qui diffèrent dans leur quantité de données, d'une part, et leur intensité de caractérisation pour caractériser le signal audio, d'autre part, les modes d'empreinte digitale différant entre eux par le fait qu'ils comportent des informations d'empreinte digitale séparées pour un nombre différent de bandes partielles, ou l'empreinte digitale échelonnable présentant des informations d'empreinte digitale pour un nombre de blocs temporels fonction du mode d'empreinte, aux étapes suivantes consistant à:

   régler (12) un mode d'empreinte digitale prédéterminé parmi la pluralité de modes d'empreinte digitale prédéterminés; et
   calculer (14) une empreinte digitale échelonnable selon le mode d'empreinte digitale prédéterminé réglé à l'aide de règles de calcul selon les informations de mode pour le mode d'empreinte digitale réglé.

2. Procédé selon la revendication 1, dans lequel l'empreinte digitale selon un mode d'empreinte digitale à force de caractéristique supérieure peut être convertie en une empreinte digitale selon un mode d'empreinte digitale à force de caractéristique inférieure.

3. Procédé selon la revendication 1 ou 2, présentant par ailleurs l'étape suivante consistant à:

   transmettre ou mémoriser l'empreinte digitale générée via un canal de transmission à capacité de transmission limitée ou sur un support de mémoire à capacité de mémoire limitée,
   à l'étape de réglage (12) d'un mode d'empreinte digitale parmi les modes d'empreinte digitale prédéterminés, le réglage ayant lieu en fonction du canal de transmission ou de la capacité de mémoire.

4. Procédé selon l'une des revendications précédentes, dans lequel le type d'empreinte digitale se réfère aux propriétés de tonalité du signal audio.

5. Procédé selon l'une des revendications précédentes, dans lequel le signal audio peut être décomposé en un nombre prédéterminé de bandes de fréquences prédéfinies (30a à 30d), dans lequel chaque mode d'empreinte digitale comprend la génération d'informations d'empreinte digitale par bande de fréquences prédéfinie, les modes d'empreinte digitale différant quant au nombre d'informations d'empreinte, de sorte qu'un premier mode d'empreinte digitale comprend, comme empreinte, séparément pour chaque bande de fréquences, un premier nombre d'informations d'empreinte digitale pour un premier nombre de bandes de fréquences, et qu'un deuxième mode d'empreinte digitale comprend, comme empreinte digitale, séparément pour chaque bande de fréquences, un deuxième nombre d'informations d'empreinte digitale pour un deuxième nombre de bandes de fréquences, le premier nombre différant du deuxième nombre, et les bandes de fréquences prédéfinies étant les mêmes pour tous les modes d'empreinte.

6. Procédé selon la revendication 5, dans lequel la décomposition du signal audio dans les bandes de fréquences prédéfinies présente au moins partiellement une division en bandes logarithmique.

7. Procédé selon la revendication 5 ou 6, dans lequel deux bandes de fréquences adjacentes en fréquence ont une zone de recouvrement, les composantes spectrales dans la zone de recouvrement appartenant aux deux bandes de fréquences adjacentes.

8. Procédé selon l'une des revendications 5 à 7, dans lequel la bande de fréquences qui comporte la fréquence la plus petite est contenue dans tous les modes d'empreinte, les modes d'empreinte digitale différant quant au nombre de bandes de fréquences suivant les hautes fréquences.

9. Procédé selon l'une des revendications 1 à 8, dans lequel le signal audio peut être décomposé en blocs successifs dans le temps (40a à 40d) d'une longueur prédéterminée,
dans lequel sont déterminées, lors de la génération d'une empreinte digitale, des informations d'empreinte digitale par bloc, les modes d'empreinte digitale différant quant au nombre de blocs qui sont représentés par des informations d'empreinte digitale, et la longueur des blocs étant identique pour tous les modes d'empreinte digitale.

10. Procédé selon la revendication 9, dans lequel est inclus, dans un premier mode d'empreinte digitale, comme informations d'empreinte digitale, la valeur moyenne et/ou la variance d'un premier nombre prédéfini de blocs, et un deuxième mode d'empreinte digitale comportant la valeur moyenne et/ou la variance d'un deuxième nombre prédéfini de blocs, le premier nombre prédéfini et le deuxième nombre prédéfini présentant entre eux un rapport de nombre entier.

11. Procédé pour caractériser un signal audio, aux étapes suivantes consistant à:

génerer une empreinte digitale de recherche du signal audio à l'aide d'informations de mode (10) qui définissent une pluralité de modes d'empreinte digitale prédéterminés, les modes d'empreinte digitale se référant tous au même type d'empreinte digitale, les modes d'empreinte digitale fournissant toutefois des empreintes digitales échelonnables différentes en ce qui concerne le temps et/ou la fréquence qui diffèrent dans leur quantité de données, d'une part, et leur intensité de caractérisation pour caractériser le signal audio, d'autre part, les modes d'empreinte digitale différant entre eux par le fait qu'ils comportent des informations d'empreinte digitale séparées pour un nombre différent de bandes partielles, ou l'empreinte digitale échelonnable présentant des informations d'empreinte digitale pour un nombre de blocs temporels fonction du modes d'empreinte, aux étapes suivantes consistant à:

régler (12) un mode d'empreinte digitale prédéterminé parmi la pluralité de modes d'empreinte digitale prédéterminés; et
calculer (14) une empreinte digitale échelonnable selon le mode d'empreinte digitale prédéterminé réglé à l'aide de règles de calcul selon les informations de mode pour le mode d'empreinte digitale réglé.

comparer (24) l'empreinte digitale calculée avec une pluralité d'empreintes digitales mémorisées qui représentent des signaux audio connus, pour caractériser le signal audio, les empreintes digitales mémorisées ayant été générées selon l'un parmi la pluralité de modes d'empreinte digitale, l'étape de comparaison (24) présentant les étapes partielles suivantes:

examiner (24a) si l'empreinte digitale de recherche et l'empreinte digitale de banque de données ont été générées selon des modes d'empreinte digitale différents;
convertir (24b) l'empreinte digitale de recherche et/ou l'empreinte digitale de banque de données de sorte que les empreintes digitales à comparer soient présentes selon le même mode d'empreinte digitale; et
effectuer (24c) la comparaison à l'aide des empreintes digitales présentes dans le même mode d'empreinte digitale.

12. Procédé selon la revendication 11, dans lequel chaque mode d'empreinte digitale comprend la génération d'informations d'empreinte digitale par bande de fréquences prédéfinie, les modes d'empreinte digitale différant quant au nombre d'informations d'empreinte, de sorte qu'un premier mode d'empreinte digitale comprend, comme empreinte digitale, séparément pour chaque bande de fréquences, un premier nombre d'informations d'empreinte digitale pour un premier nombre de bandes de fréquences, et qu'un deuxième mode d'empreinte digitale comprend, comme empreinte digitale, séparément pour chaque bande de fréquences, un deuxième nombre d'informations d'empreinte digitale pour un deuxième nombre de bandes de fréquences, le premier nombre différant du deuxième nombre, l'étape de conversion (24b) présentant la suppression d'informations d'empreinte digitale pour bandes partielles.

13. Procédé selon la revendication 11,
dans lequel le signal audio peut être décomposé en blocs successifs dans le temps (40a à 40d) d'une longueur prédéterminée,
dans lequel, lors de la génération d'une empreinte digitale, les informations d'empreinte digitale sont déterminées par bloc, les modes d'empreinte digitale différant quant au nombre de blocs qui sont représentés par les informations d'empreinte digitale, et la longueur des blocs étant identique pour tous les modes d'empreinte digitale, et
dans lequel l'étape de conversion (24b) présente l'étape consistant à regrouper les informations d'empreinte digitale de blocs successifs dans le temps.

**14.** Procédé selon la revendication 13,
dans lequel les informations d'empreinte digitale comportent une valeur moyenne et/ou une variance, et
dans lequel il existe un rapport de nombre entier entre les blocs regroupés dans l'empreinte digitale de recherche
et les blocs regroupés dans l'empreinte digitale de banque de données.

**15.** Représentation d'empreinte digitale d'un signal audio, aux caractéristiques suivantes:

une empreinte digitale échelonnable en ce qui concerne le temps et/ou la fréquence, l'empreinte digitale étant
réalisée selon l'un parmi une pluralité de modes d'empreinte digitale prédéterminés, les modes d'empreinte
digitale se référant tous au même type d'empreinte digitale, les modes d'empreinte digitale fournissant toutefois
des empreintes digitales échelonnables différentes en ce qui concerne le temps et/ou la fréquence qui diffèrent
dans leur quantité de données, d'une part, et leur intensité de caractérisation pour caractériser le signal audio,
d'autre part, l'empreinte digitale échelonnable présentant des informations d'empreinte digitale séparées pour
des bandes partielles du signal audio, les modes d'empreinte digitale différant l'un de l'autre par le fait qu'ils
comprennent des informations d'empreinte digitale séparées pour un nombre de blocs temporels fonction du
mode d'empreinte,
un indicateur (31) qui indique le mode d'empreinte digitale à la base de l'empreinte digitale.

**16.** Dispositif pour générer une empreinte digitale d'un signal audio à l'aide d'informations de mode (10) qui définissent
une pluralité de modes d'empreinte digitale prédéterminés, les modes d'empreinte digitale se référant tous au même
type d'empreinte digitale, les modes d'empreinte digitale fournissant toutefois des empreintes digitale échelonnables
différentes en ce qui concerne le temps et/ou la fréquence qui diffèrent dans leur quantité de données, d'une part,
et leur intensité de caractérisation pour caractériser le signal audio, d'autre part, les modes d'empreinte digitale
différant entre eux par le fait qu'ils comportent des informations d'empreinte digitale séparées pour un nombre
différant de bandes partielles, ou l'empreinte digitale échelonnable présentant des informations d'empreinte digitale
pour un nombre de blocs temporels fonction du mode d'empreinte, aux caractéristiques suivantes:

un moyen destiné à régler (12) un mode d'empreinte digitale prédéterminé parmi la pluralité de modes d'empreinte digitale prédéterminés; et
un moyen destiné à calculer (14) une empreinte digitale échelonnable selon le mode d'empreinte digitale prédéterminé réglé à l'aide de règles de calcul selon les informations de mode pour le mode d'empreinte digitale
réglé.

**17.** Dispositif pour caractériser un signal audio, aux caractéristiques suivantes:

un moyen destiné à générer une empreinte digitale de recherche du signal audio à l'aide d'informations de
mode (10) qui définissent une pluralité de modes d'empreinte digitale prédéterminés, les modes d'empreinte
digitale se référant tous au même type d'empreinte digitale, les modes d'empreinte digitale fournissant toutefois
des empreintes digitales échelonnables différentes en ce qui concerne le temps et/ou la fréquence qui diffèrent
dans leur quantité de données, d'une part, et leur intensité de caractérisation pour caractériser le signal audio,
d'autre part, les modes d'empreinte digitale différant entre eux par le fait qu'ils comportent des informations
d'empreinte digitale séparées pour un nombre différent de bandes partielles, ou l'empreinte digitale échelonnable
présentant des informations d'empreinte digitale pour un nombre de blocs temporels fonction du mode d'empreinte, aux caractéristiques suivantes:

un moyen destiné à régler (12) un mode d'empreinte digitale prédéterminé parmi la pluralité de modes
d'empreinte digitale prédéterminés; et
un moyen destiné à calculer (14) une empreinte digitale échelonnable selon le mode d'empreinte digitale
prédéterminé réglé à l'aide de règles de calcul selon les informations de mode pour le mode d'empreinte
digitale réglé.

un moyen destiné à comparer (24) l'empreinte digitale calculée avec une pluralité d'empreintes digitales mémorisées qui représentent des signaux audio connus, pour caractériser le signal audio, les empreintes digitales
mémorisées ayant été générées selon l'un parmi la pluralité de modes d'empreinte digitale, aux caractéristiques
partielles suivantes:

un moyen destiné à examiner (24a) si l'empreinte digitale de recherche et l'empreinte digitale de banque
de données ont été générées selon des modes d'empreinte digitale différents;

un moyen destiné à convertir (24b) l'empreinte digitale de recherche et/ou l'empreinte digitale banque de données de sorte que les empreintes digitales à comparer soient présentes selon le même mode d'empreinte digitale; et

un moyen destiné à effectuer (24c) la comparaison à l'aide des empreintes digitales présentes dans le même mode d'empreinte digitale.

Modusinformationen für
kompatible FA-Modi

10

Einstellen eines
Modus der
vorbest.
Fingerabdruckmodi

12

16

Audiosignal

Berechnen des
Fingerabdrucks
gemäß eingestelltem
Fingerabdruckmodus

14

18

Fingerabdruck

Fig. 1

Fig. 2

Fig. 3a

Fig. 3b

u(t)

Block 1 | Block 2 | Block 3 | Block 4

40a  40b  40c  40d

t

## Fig. 4a

ID

| FAI (Block 1) | FAI (Block 2) | FAI (Block 3) | FAI (Block 4) | FA-Modus Nr. 3 |

42

ID

| FAI (Block 1+2) | FAI (Block 3+4) | FA-Modus Nr. 2 |

ID

| FAI (Block 1-4) | FA-Modus Nr. 1 |

## Fig. 4b

EP 1 405 222 B1

Klassen-Generator

TRAINING      50

Cluster-
Generierung      62

Merkmals-Extraktor      Merkmals-Prozessor

Signalvorverarbeitung → Merkmalsextraktion → Merkmalsverarbeitung

Klassen-
Datenbank      54

56      58      60

KLASSIFIKATION      52

Klassifikator

Klassifikation      64

Identifikation

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5918223 A

- US 5918203 A

**In der Beschreibung aufgeführte Nicht-Patentliteratur**

- **YAO WANG U.A.** Multimedia Content Analysis. *IEEE Signal Processing Magazine,* November 2000, 12-36

- **N. JAYANT ; P. NOLL.** Digital Coding of Waveforms. Prentice-Hall, 1984